(19) **Europäisches Patentamt European Patent Office Office européen des brevets**

(11) **EP 3 680 615 B1**

(12) **FASCICULE DE BREVET EUROPEEN**

(45) Date de publication et mention de la délivrance du brevet:
**30.07.2025 Bulletin 2025/31**

(21) Numéro de dépôt: **20150301.8**

(22) Date de dépôt: **06.01.2020**

(51) Classification Internationale des Brevets (IPC):
***G01C 21/00*** *(2006.01)* ***G06T 7/20*** *(2017.01)*

(52) Classification Coopérative des Brevets (CPC):
**G06T 7/248; G06T 7/246; G06T 7/277;**
G06T 2207/30244; G06T 2207/30252

(54) **METHODE DE DETERMINATION D'UN RAYON DE PROTECTION D'UN SYSTEME DE NAVIGATION BASE SUR LA VISION**

BESTIMMUNGSVERFAHREN EINES SCHUTZRADIUS EINES SICHTGESTÜTZTEN NAVIGATIONSSYSTEMS

METHOD FOR DETERMINING A RADIUS OF PROTECTION FOR A VISION-BASED NAVIGATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.01.2019 FR 1900233**

(43) Date de publication de la demande:
**15.07.2020 Bulletin 2020/29**

(73) Titulaire: **Thales**
**92400 Courbevoie (FR)**

(72) Inventeur: **LOMBARDI, Warody**
**26027 VALENCE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2018/026544 US-A1- 2016 005 164**

**Description**

**Domaine technique de l'invention**

L'invention se situe dans le domaine des systèmes de navigation basés sur la vision destinés à être utilisés pour déterminer le déplacement et/ou le positionnement de corps en mouvement tels que des véhicules (automobiles, avions ...), des drones, des robots, des dispositifs portables ...

L'invention concerne plus précisément la problématique de la détermination de l'intégrité d'un système de navigation basé sur la vision, définie par un rayon de protection.

**Etat de la technique**

Parmi les systèmes de navigation connus, il existe les systèmes de navigation globale par satellite (connus sous l'acronyme « GNSS » de « Global Navigation Satellite System »), comme par exemple le système de positionnement global connu sous l'acronyme « GPS » (pour « Global Positioning System »), qui peuvent être utilisés pour fournir des informations de navigation, par exemple, la position et la vitesse d'un véhicule, d'un robot, d'un dispositif portable, plus généralement de tout corps en mouvement ou de tout corps dont on souhaite connaître la position.

Il existe également les systèmes de navigation par inertie (connus sous l'acronyme « INS » pour « Inertial Navigation System ») qui sont des systèmes de navigation embarqués sur un porteur permettant de recueillir des informations sur la position du porteur, l'altitude, l'attitude et la vitesse à partir de capteurs inertiels, généralement au moins un capteur d'accélération (accéléromètre) et au moins un capteur de rotation (gyromètre). Un inconvénient des systèmes de navigation par inertie réside dans des erreurs des capteurs lors de l'estimation de la rotation et de l'accélération (biais, dérives, bruits, facteurs d'échelle, non-linéarité, défauts d'alignement, etc.) qui induisent dans le temps des dérives sur l'estimation de la position.

Les systèmes de navigation peuvent être utilisés seuls ou combinés entre eux. On pourra parler dans ce cas de systèmes hybrides. Par exemple un système à inertie pourra être utilisé en complément d'un système de navigation par satellite, notamment pour pallier une perte d'un ou de plusieurs satellites, ou inversement pour pallier les dérives des systèmes de navigation inertiel.

Malgré cela, la navigation par système hybride INS/GNSS présente l'inconvénient d'être susceptible à des phénomènes qui dégradent sa performance ou qui invalident complètement son utilisation, tels que le masquage de satellites ou le brouillage des signaux émis par les satellites ...

De fait, il est de plus en plus courant d'utiliser des systèmes de navigation basés sur la vision.

Il existe des systèmes de navigation basés sur la vision dits « embarqués » qui comprennent généralement au moins une caméra disposée sur un corps dont on souhaite connaître le mouvement et/ou la position, par exemple un véhicule, un drone, un robot, un dispositif portable. Le corps peut être nommé « porteur ». Chaque caméra est utilisée pour capturer des images qui sont ensuite traitées par un calculateur afin de fournir des informations sur la vitesse, la trajectoire du porteur et/ou sur sa position. Le calculateur identifie des points caractéristiques (ou points d'intérêt) sur au moins une image et met en correspondance les points caractéristiques entre les images. Ainsi, la mise en correspondance des points caractéristiques entre les images est utilisée, par exemple, pour déterminer une translation et/ou une rotation relative entre les images.

Il existe également des systèmes de navigation basés sur la vision dits « fixes » pour lesquels la caméra n'est pas disposée sur le corps dont on souhaite connaître le mouvement. Dans ce cas, chaque caméra doit viser le corps en mouvement et le calculateur identifie des points caractéristiques du corps en mouvement entre les images.

Que ce soit pour un système embarqué ou fixe, on peut donc utiliser une ou plusieurs caméras, ou utiliser tout autre capteur apte à réaliser des images, par exemple un radar (on peut parler dans ce cas d'images radar) comme un radar à synthèse d'ouverture (RSO), ou un capteur IR (on peut parler dans ce cas d'images Infra-Rouge).

Cette technique de navigation basée sur la vision peut être nommée « odométrie visuelle » dans la présente description. Ainsi, à partir d'un simple capteur apte à réaliser des images, on peut extraire des informations permettant d'obtenir notamment une translation et une rotation entre au moins deux images, et de remonter au déplacement et/ou à la position d'un corps en mouvement. Un avantage d'un système de navigation basé sur la vision est sa furtivité, et le fait qu'il ne peut pas être masqué ou brouillé.

La navigation basée sur la vision peut être utilisée seule ou en combinaison avec un autre système de navigation, par exemple avec un système de navigation par satellite et/ou avec un système de navigation par inertie (on peut par exemple disposer sur un porteur une ou plusieurs caméras et un ou plusieurs capteurs inertiels).

Dans tout système de navigation, un enjeu majeur est de connaître l'intégrité dudit système. Dans le domaine de l'invention, l'intégrité représente le degré de confiance que l'on peut placer dans l'exactitude des informations fournies par un système de navigation. En complément, l'intégrité peut également représenter la capacité à avertir l'utilisateur d'un dysfonctionnement dudit système dans un délai raisonnable.

Dans le cas d'un système GNSS ou d'un hybride GNSS/INS, il peut se produire un évènement tel une défaillance dudit système, un brouillage ou un masquage d'un satellite. Un tel évènement se traduit généralement par l'apparition d'une erreur sur les informations de localisation fournies par le système, également nommée « défaillance de positionnement ». Dans des applications comme l'aviation où la fiabilité des informations de position est cruciale, de telles défaillances de positionnement d'un système de navigation doivent impérativement être gérées.

La mesure de l'intégrité d'un système est généralement réalisée en définissant des bornes d'alerte. On dit qu'il y a une défaillance de positionnement lorsque la différence entre la position réelle du corps et celle fournie par le système de navigation dépasse les bornes d'alerte définies.

Les bornes d'alertes désignent les erreurs de position maximales que le système peut commettre en respectant les contraintes d'intégrité. Ces bornes sont définies pour l'erreur de position horizontale et verticale : elles sont nommées respectivement « HAL » (pour « Horizontal Alert Limit » en anglais) ou « HPL » (pour « Horizontal protection level » en anglais), ainsi que « VAL » (pour « Vertical Alert Limit » en anglais) and « VPL » (pour « Vertical Protection Level » en anglais). En ce qui concerne l'erreur de position horizontale, on peut également parler de « rayon de protection ».

La mesure de l'intégrité d'un système peut être complétée par un temps d'alerte. Le temps d'alerte ou « TTA » (pour « Time-To-Alert » en anglais) est l'intervalle de temps maximum autorisé entre l'instant où le système ne satisfait plus aux exigences opérationnelles du type d'opération et l'instant où le système indique une alerte de navigation.

Si le calcul du rayon de protection a été abordé pour le cas de la navigation GPS, ou encore de la navigation hybridée inertie/GPS, il n'existe pas encore de méthode satisfaisante pour déterminer un rayon de protection d'un système de navigation par vision, notamment du fait de la nature des mesures et des calculs qui sont très différentes entre une navigation par satellite et une navigation par vision. En effet, les systèmes de navigation par satellite déterminent le positionnement d'un utilisateur possédant un récepteur GNSS, à partir d'ondes radioélectriques émises par des satellites en orbite dans l'espace. La position des satellites est connue. La position du récepteur est calculée par trilatération à partir des mesures de distance séparant l'utilisateur des satellites en vue du récepteur. Dans le cas de la navigation par vision en revanche, il n'existe pas d'émission d'ondes, ni d'émission de toute autre donnée de la part du corps en mouvement. En outre, dans un système embarqué, on ne connaît pas la position de la caméra (puisqu'on recherche justement la position du porteur de caméra). Le principe de la navigation par vision étant tout à fait différent de celui de la navigation par satellite, il n'est pas évident, voire il est impossible, d'appliquer à un système de navigation par vision les méthodes de détermination du rayon de protection utilisées pour un système satellite.

US 2016/005164 A1 concerne un système de navigation inertielle assisté par vision (« VINS »). Un tel système comprend une source d'image pour produire des données d'image et une unité de mesure inertielle (IMU) pour produire des données indicatives du mouvement du système VINS tout en produisant les données d'image. Le système VINS comprend en outre une unité de traitement comprenant un estimateur qui traite les données de l'IMU et les données d'image, notamment pour calculer les paramètres d'étalonnage du système en plus de calculer le mouvement dudit système.

WO 2018/026544 A1 divulgue un système de navigation VINS basé sur la fusion de capteurs visuels et inertiels. La caméra capture des images pendant que la plate-forme se déplace, extrait des points caractéristiques et les suit, ce qui permet d'obtenir des informations sur le mouvement. Il est expliqué en détail comment la position d'un point unique est utilisée dans l'algorithme du filtre de Kalman avec la covariance d'état correspondante propagée et l'obtention d'une enveloppe d'erreur « 3 sigma bound ».

L'invention vise à disposer d'une méthode de détermination de l'intégrité, et en particulier de déterminer un rayon de protection pour un système de navigation par vision.

De manière avantageuse, l'invention vise à disposer d'une méthode permettant de déterminer de manière précise un rayon de protection.

De manière avantageuse, l'invention vise à disposer d'une méthode simple à mettre en œuvre, rapide et adaptable à toute méthode de traitement d'un système de navigation par vision, et tout système de navigation par vision.

**Expose de l'invention**

Un premier objet de l'invention permettant d'atteindre ce but est une méthode de détermination d'un rayon de protection d'un système de navigation par vision, ledit système comprenant :

- au moins un capteur d'images adapté à réaliser au moins une première image à un premier instant et une deuxième image à un deuxième instant ; et
- une unité de traitement couplée à chaque capteur d'images et adapté à implémenter une méthode de traitement adapté à déterminer au moins une valeur de mouvement entre le premier instant et le deuxième instant à partir de la première image, de la deuxième image et d'une pluralité de données images déterminées sur les au moins première et deuxième images, les données images comprenant des coordonnées d'une pluralité de points d'intérêt sur au moins la première image et la deuxième image;

ladite méthode de détermination d'un rayon de protection comprenant les étapes suivantes :

- une première étape de détermination d'au moins une valeur nominale d'incertitude de la au moins une valeur de mouvement obtenue par la méthode de traitement pour un ensemble comprenant la pluralité de données images déterminées ;
- une seconde étape de détermination de i-èmes sous-valeurs d'incertitude de la au moins une valeur de mouvement déterminée par la méthode de traitement pour un i-ème sous-ensemble défini en enlevant une i-ème partie des données image déterminées ;
- une troisième étape de détermination d'un i-ème rayon de protection pour le i-ème sous-ensemble à partir des i-èmes sous-valeurs d'incertitude et de la au moins une valeur nominale d'incertitude ;

les seconde et troisième étapes étant réitérées pour chaque i-ème sous-ensemble, i variant entre 1 et une valeur M définie ;

- une quatrième étape de détermination d'un rayon de protection à partir des M i-ème rayons de protection déterminés.

L'invention permet de déterminer un rayon de protection pour un système de navigation par vision. La précision de cette détermination dépend du nombre M et de la sélection des sous-ensembles, qui peuvent être déterminés en fonction du système de navigation (et donc de la méthode de traitement) mis en œuvre.

Il est rappelé que le rayon de protection désigne l'erreur maximale de position horizontale que le système de navigation peut commettre : il peut être nommé « HAL » (pour « Horizontal Alert Limit » en anglais) ou « HPL » (pour « Horizontal protection level » en anglais).

Selon l'invention, il y a un rayon de protection par mouvement (un rayon de protection pour la translation et/ou un rayon de protection pour la rotation).

Plus généralement, la méthode selon l'invention peut s'adapter en fonction du système de navigation mis en œuvre, puisque le principe de la méthode est de calculer des incertitudes des valeurs de mouvement obtenues par la méthode de traitement (quelle que soit la méthode). Le mode de calcul de ces incertitudes peut se faire de différentes manières, et l'homme du métier œuvrant dans le domaine de l'invention saura adapter le mode de calcul des incertitudes en fonction de la méthode de traitement utilisée. Des modes de calculs sont donnés plus après dans la description détaillée, mais ne sont pas limitatifs.

En outre, le principe de la méthode de détermination d'un rayon de protection est simple et la rapidité de calcul dépend notamment du nombre de sous-ensembles sélectionnés (et donc de la précision recherchée). La précision recherchée dépend notamment du domaine auquel le système de navigation est destiné.

De préférence, la quatrième étape de détermination est réalisée en prenant le plus grand parmi les i-èmes rayons de protection déterminés. En d'autres termes, le rayon de protection est choisi comme étant le plus grand parmi les i-èmes rayons de protection déterminés.

Selon un mode de réalisation, la troisième étape de détermination comprend :

- une première sous-étape de détermination des i-èmes différences entre les i-èmes sous-valeurs d'incertitude et la au moins une valeur nominale d'incertitude ; et
- une seconde sous-étape de détermination d'un i-ème écart-type des différences comme étant la plus grande valeur d'écart-type des i-èmes différences ;

le i-ème rayon de protection étant déterminé à partir du i-ème écart-type des différences.

Selon un mode de réalisation, la troisième étape de détermination comprend en outre :

- une troisième sous-étape de détermination d'un i-ème écart-type des différences corrigé, comme étant le i-ème écart-type des différences multiplié par une première constante de pondération ;

le i-ème rayon de protection étant déterminé à partir du i-ème écart-type des différences corrigé.

Selon un mode de réalisation particulier, la valeur de la première constante de pondération est obtenue à partir de la probabilité de fausse alarme du système de navigation par vision, par exemple en utilisant une fonction inverse de probabilité de densité de la distribution.

Selon un mode de réalisation, la troisième étape de détermination comprend en outre :

- une quatrième sous-étape de détermination d'un i-ème écart-type du i-ème sous-ensemble comme étant la plus grande valeur d'écart-type des i-èmes sous-valeurs d'incertitude ;

le i-ème rayon de protection étant déterminé à partir d'une somme entre le i-ème écart-type des différences ou le i-ème écart-type des différences corrigé et le i-ème écart-type.

Selon un mode de réalisation, la troisième étape de détermination comprend en outre :

- une cinquième sous-étape de détermination d'un i-ème écart-type corrigé, comme étant le i-ème écart-type multiplié par une seconde constante de pondération ;

le i-ème rayon de protection étant déterminé à partir d'une somme entre le i-ème écart-type des différences ou le i-ème écart-type des différences corrigé et le i-ème écart-type corrigé.

Selon un mode de réalisation particulier, la valeur de la seconde constante de pondération est obtenue à partir de la probabilité de non-détection du système de navigation par vision, par exemple en utilisant une fonction inverse de probabilité de densité de la distribution.

Selon un mode de réalisation, les valeurs d'incertitude (comprenant les sous-valeurs) d'au moins une valeur de mouvement obtenue par la méthode de traitement sont définies par une matrice de covariance de ladite valeur de mouvement.

Selon un mode de réalisation, les valeurs d'incertitude d'au moins une valeur de mouvement obtenue par la méthode de traitement sont déterminées en propageant le bruit au niveau d'au moins une parmi les première et deuxième images sur les grandeurs intermédiaires nécessaires au calcul par ladite méthode de traitement de ladite valeur de mouvement.

Selon un mode de réalisation, la méthode comprend une étape préalable de détermination d'une matrice de covariance de la au moins une valeur de mouvement obtenue par la méthode de traitement, ladite étape préalable comprenant les étapes suivantes :

- une première sous-étape de caractérisation d'un bruit au niveau d'au moins une parmi la première et la deuxième image de manière à obtenir une matrice de covariance dudit bruit ; et
- au moins une sous-étape complémentaire de propagation de la matrice de covariance du bruit obtenue sur le ladite valeur de mouvement, ladite au moins une sous-étape complémentaire étant apte à propager la matrice de covariance du bruit sur les grandeurs intermédiaires nécessaires au calcul de la au moins une valeur de mouvement par la méthode de traitement.

Selon un mode de réalisation, la méthode de traitement comprend les étapes suivantes :

- une première étape d'acquisition d'au moins une première et une seconde images comprenant en outre l'acquisition d'au moins une troisième image ;
- une deuxième étape de détermination d'au moins une valeur de mouvement intermédiaire entre au moins une première et une deuxième image, comprenant une sous-étape de sélection de points d'intérêt communs auxdites première et seconde images ;
- une troisième étape de détermination de points dans l'espace correspondant à des points d'intérêt communs aux première et seconde images ;
- une quatrième étape de détermination de la au moins une valeur de mouvement finale à partir des points dans l'espace déterminés et de points d'intérêt dans la au moins une troisième image ;

et la au moins une sous-étape complémentaire de propagation de la matrice de covariance du bruit sur la valeur de mouvement comprend :

- une sous-étape de propagation de la matrice de covariance du bruit à la au moins une valeur de mouvement intermédiaire ;
- une sous-étape de propagation de la matrice de covariance de la au moins une valeur de mouvement intermédiaire aux points dans l'espace ;
- une sous-étape de propagation de la matrice de covariance des points dans l'espace à la au moins une valeur de mouvement finale.

Selon un mode de réalisation, au moins une valeur de mouvement est une valeur de rotation et/ou une valeur de translation.

Selon un mode de réalisation, les données images comprennent des coordonnées d'une pluralité de points d'intérêt sur au moins les première et deuxième images.

Sauf indication contraire, les différents modes de réalisation peuvent être combinés entre eux. Un second objet de l'invention concerne une méthode de traitement apte à déterminer au moins une valeur de mouvement entre un premier instant et un deuxième instant à partir d'une première image prise au premier instant, d'une deuxième image prise au deuxième instant et d'une pluralité de données image déterminées sur les au moins première et deuxième images, comprenant en outre une méthode de détermination d'un rayon de protection selon l'invention.

Un troisième objet de l'invention concerne également un système de navigation par vision comprenant :

- au moins un capteur d'images adapté à réaliser au moins une première image à un premier instant et une deuxième image à un deuxième instant ; et
- une unité de traitement couplée au capteur d'images et adapté à implémenter la méthode de traitement selon l'invention.

Selon l'invention, on définit par « méthode de traitement » une méthode de traitement d'image et de calcul adapté à déterminer des valeurs de mouvement, par exemple de translation et/ou de rotation, d'un corps à partir d'images acquises par au moins un capteur d'images. Ledit capteur d'images peut être soit positionné au niveau du corps en mouvement (alors « porteur »), soit disposé de manière à pouvoir viser le corps en mouvement.

Le système de navigation basé sur la vision peut comprendre un ou plusieurs capteurs d'images.

Les images acquises par le ou les capteurs d'images fournissent des données image.

La méthode de traitement est configurée pour exploiter ces données images. Les données images peuvent être obtenues à partir de points images caractéristiques qui peuvent être mis en correspondance entre au moins deux images. Dans l'ensemble de la description, de tels points images caractéristiques peuvent être nommés « points d'intérêt ».

Ainsi, lorsqu'on enlève une partie des données images, cela peut signifier par exemple qu'on ne tient pas compte d'un capteur d'images (typiquement d'une ou de plusieurs images obtenues à partir d'un capteur d'image), et/ou de points d'intérêt.

Par « point image », on entend des points ou pixels d'une image, donc définis sur un plan. Ils comprennent deux coordonnées (sur le plan de l'image). Dans l'ensemble de la description, on pourra désigner les points image par des points « 2D ».

Par opposition, on désigne par « points 3D » des points dans l'espace et non seulement dans un plan et qui comprennent donc trois coordonnées.

Selon l'invention, le système de navigation basé sur la vision doit être compris comme intégrant une méthode de traitement.

## Brève description des figures

D'autres caractéristiques et avantages de l'invention apparaîtront à l'aide de la description qui suit, donnée à titre illustratif et non limitatif, faite en regard des figures annexées parmi lesquelles :

[Fig.1] représente un système de navigation basé sur la vision ;

[Fig.2] représente un système de navigation basé sur la vision intégrant un calculateur d'intégrité ;

[Fig.3] représente une image traitée avec un algorithme de Harris pour déterminer des points d'intérêts ;

[Fig.4] représente une corrélation réalisée entre deux images ;

[Fig.5] illustre la géométrie épipolaire ;

[Fig.6] représente la corrélation de la [Fig.4], des points non corrélés étant éliminés ;

[Fig.7] illustre un calcul d'un rayon de protection d'un sous-ensemble ;

[Fig.8] illustre sous forme de logigramme un exemple d'algorithme de vision incluant un exemple de méthode de détermination d'un rayon de protection.

## Description détaillée de l'invention

Dans la description détaillée de l'invention qui suit, l'invention est appliquée à un système de navigation basé sur la vision qui est embarqué sur un porteur et qui utilise une caméra monoculaire. Le système de vision monoculaire est moins coûteux en matériel, ainsi qu'en acquisition et traitement de données.

La longueur d'onde, la bande de fréquence, et d'autres caractéristiques de la caméra le cas échéant, peuvent varier en fonction de l'implémentation et du mode d'utilisation spécifiques de ladite caméra.

Tout autre capteur d'images adapté peut être utilisé, par exemple une caméra binoculaire, un capteur de détection de la lumière et de télémétrie (LiDAR), un capteur de détection et de télémétrie radio à ondes millimétriques (RADAR), ou encore un imageur Infra-Rouge (« IR »). Plusieurs capteurs peuvent être combinés.

L'invention peut alternativement être appliquée à système de navigation basé sur la vision fixe (au lieu d'un système embarqué).

Les mouvements déterminés dans la description détaillée sont la rotation et la translation et le système de navigation par vision est basé sur les points d'intérêt. Les données images comprennent les coordonnées sur les plans image de ces points d'intérêt.

Dans la suite de la description, la rotation et/ou la translation déterminés à partir de points images sont désignés par rotation et/ou translation « 2D-2D ». Par opposition, la rotation et/ou la translation déterminés à partir de points images et de points dans l'espace sont désignés par rotation et/ou translation « 3D-2D ».

En pratique, la finalité de la méthode de traitement décrite ci-après est de déterminer une valeur de mouvement 3D-2D, par exemple la rotation et/ou la translation 3D-2D, qui est ainsi une grandeur finale, alors qu'une valeur de mouvement 2D-2D, par exemple la rotation et/ou la translation 2D-2D, est une grandeur intermédiaire nécessaire pour le calcul de la (ou des) grandeur(s) finale(s).

Il faut comprendre que d'autres modes de réalisation peuvent être utilisés et notamment que des modifications logiques peuvent être effectuées. En outre, les modes de réalisations présentés dans la description détaillée de l'invention ne doivent pas être interprétés comme limitant l'ordre des étapes et sous-étapes. La description détaillée qui suit ne doit donc pas être interprétée comme limitative.

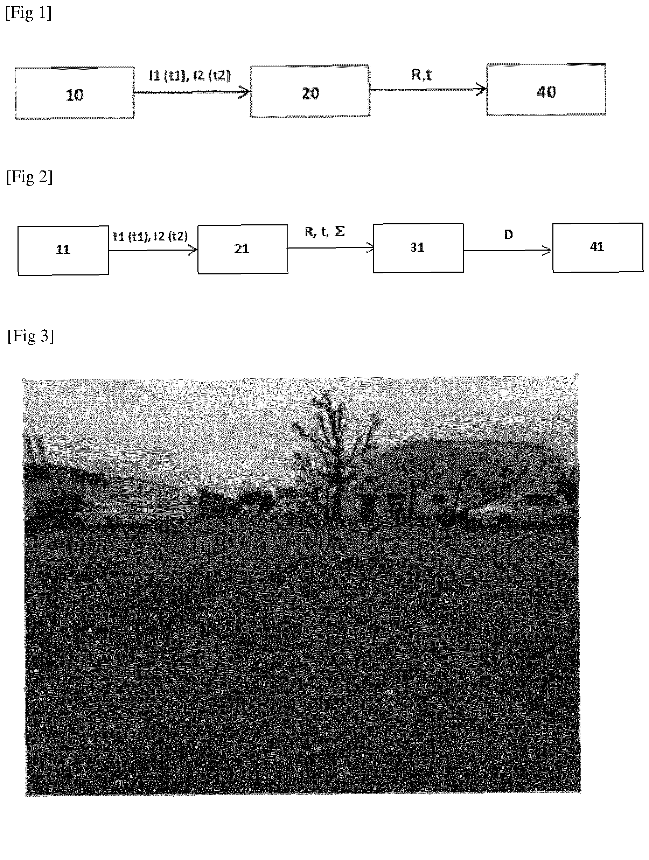

Un système de navigation basé sur la vision comprend généralement les éléments illustrés en figure 1 :

- un capteur d'image 10 disposé sur un porteur et permettant de réaliser au moins une première image I1 à un premier instant t1 et une deuxième image I2 à un deuxième instant t2 ;
- une unité de traitement 20 couplée au capteur d'image 10 et adapté à implémenter une méthode de traitement apte à calculer une translation t et/ou une rotation R du porteur (ou plus généralement un mouvement) entre le premier instant t1 et le deuxième instant t2 à partir de la première image I1 et de la deuxième image I2 ;
- une unité d'affichage 40 permettant d'afficher la translation t et la rotation R calculées.

La méthode de traitement peut être sous la forme d'un algorithme et peut également être nommée par simplification « algorithme de navigation par vision » ou « algorithme de vision » dans la présente description.

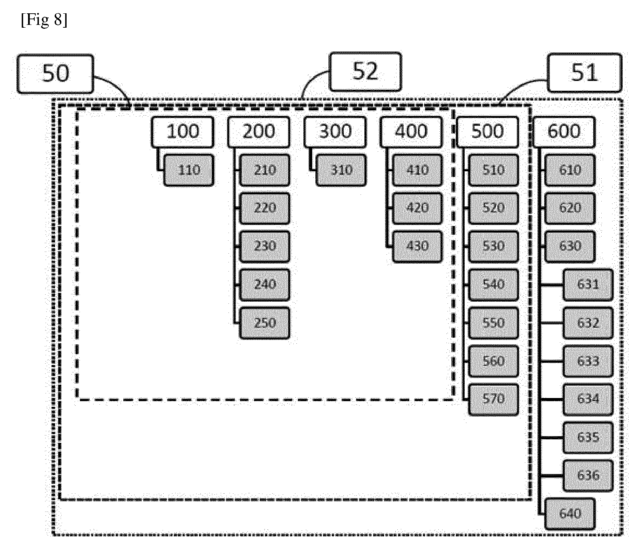

La méthode de traitement 50 comprend les étapes suivantes, illustrées notamment en figure 8 :

- une première étape 100 d'acquisition et/ou de traitement d'au moins une première image I1 prise à un premier instant t1 et une deuxième image I2 prise à un deuxième instant t2 ;
- une deuxième étape 200 de détermination de la rotation et de la translation intermédiaires entre la première image I1 et la deuxième image I2 (rotation et translation « 2D-2D »);
- une troisième étape 300 d'obtention de premiers points 3D à partir des première et deuxième images ;
- une quatrième étape 400 de détermination de la rotation et de la translation finales à partir des premiers points 3D obtenus et d'une troisième image I3 prise à un troisième instant t3 (rotation et translation « 3D-2D »).

La première étape 100 d'acquisition et/ou de traitement des images peut être réalisée avant la seconde étape 200 et peut également être réalisée avant la quatrième étape 400. Plus généralement elle peut être réalisée plusieurs fois et/ou à tout moment dans le déroulement de la méthode de traitement. Elle permet d'acquérir au moins une première et une seconde image, et peut permettre également l'acquisition d'au moins une troisième image.

La première étape 100 peut comprendre une sous-étape 110 de correction des distorsions radiale et/ou tangentielle d'au moins les première et deuxième images. En effet, les images traversant une lentille avant d'arriver au capteur, il peut se produire des distorsions radiales et tangentielles. Il est donc souhaitable d'identifier ces distorsions et de les corriger avant d'utiliser les images aux fins de la navigation. Cette étape peut être également nommée étape de « calibrage » de la caméra. En pratique, cette étape de calibrage consiste en l'acquisition d'images comprenant des points de calibrage dont on connait les coordonnées en trois dimensions, auxquels on applique une rotation et une translation. On peut utiliser une image de damier, car les intersections entre les cases blanches et noires sont facilement identifiables et donc connues et peuvent en outre former des lignes parfaitement droites. Dans ce cas, on utilise un algorithme qui identifie les paramètres du polynôme passant par les intersections et génère une correction à être appliquée aux images. On peut utiliser par exemple l'algorithme « camera calibration toolbox for Matlab » de J. Y. Bouguet, qui est facile d'utilisation.

La deuxième étape 200 comprend une première sous-étape 210 pour la sélection de points d'intérêt. En effet, pour pouvoir traiter les images, on peut sélectionner des points d'intérêt qui, comme cela a été défini plus avant, sont des points image caractéristiques que l'on retrouve au moins dans la première et la deuxième image, mais qui sont généralement en décalage du fait du déplacement entre les deux images. Les points d'intérêt sont mis en correspondance entre lesdites images pour être comparés, dans le but d'obtenir des valeurs de rotation et de translation les plus précises possible. De nombreuses méthodes existent pour sélectionner des points d'intérêt dans une image : par exemple la méthode « Scale Invariant Feature Transform » (« SIFT »), ou « Speeded Up Robust Features » (« SURF ») », « Binary Robust Independent Elementary Features » (« BRIEF »), « Oriented Fast and Rotated Brief » (« ORB »), « Center Surround Extremas » (« CENSURE »), ou encore l'algorithme de Harris ...

Dans un mode de réalisation préféré, la première sous-étape 210 de sélection des points d'intérêt comprend l'utilisation de l'algorithme de Harris, pour son compromis entre rapidité, précision, et robustesse. L'algorithme de Harris repose sur le principe de détection de coins et d'arêtes. Chaque pixel de l'image est évalué en fonction de son voisinage, et si un pixel a suffisamment de contraste par rapport aux pixels environnants (selon un seuil fixé par l'utilisateur), ledit pixel est retenu comme « point d'intérêt ». La figure 3 montre un exemple d'image traitée avec l'algorithme de Harris, mettant en évidence les points d'intérêt. Il est possible de limiter le nombre de points d'intérêt, par exemple à une valeur de l'ordre de 1000 points maximum.

De préférence, la deuxième étape 200 peut comprendre une deuxième sous-étape 220 de normalisation des pixels entre la première et la seconde image, par exemple à l'aide d'un filtre moyenneur comme suit :

[Math. 1]

$$\widehat{I1} = \frac{I1 - \overline{I1}}{\|I1 - \overline{I1}\|}$$

Où $I1$ est l'ensemble de pixels de la première image, $\overline{I1}$ est la valeur moyenne des pixels de la première image, après application du filtre moyenneur et $\widehat{I1}$ est l'image normalisée.

[Math. 2]

$$\widehat{I2} = \frac{I2 - \overline{I2}}{\|I2 - \overline{I2}\|}$$

Où $I2$ est l'ensemble de pixels de la deuxième image, $\overline{I2}$ est la valeur moyenne des pixels de la deuxième image, après application du filtre moyenneur et $\widehat{I2}$ est l'image normalisée.

Au lieu de normaliser tous les pixels de l'image, on peut alternativement appliquer la normalisation seulement à des pixels autour des points d'intérêt.

La deuxième étape 200 comprend une troisième sous-étape 230 de corrélation entre les première et deuxième images, de préférence normalisées selon la deuxième sous-étape 220, qui permet de corréler les points d'intérêt entre les deux images.

La corrélation est réalisée par exemple à l'aide de l'opérateur ci-dessous qui doit être réalisé autour des indices k et l :

[Math. 3]

$$C(k, l) = \sum_i \sum_j \widehat{I1}(i, j)\widehat{I2}(i - k, j - l)$$

Où i, j est le pixel à la ième ligne et jème colonne de l'image, et k et l sont les indices de la matrice de corrélation, où on réalise la corrélation dans une fenêtre de taille w (en pixels) centrée sur k et 1, déterminée par l'utilisateur.

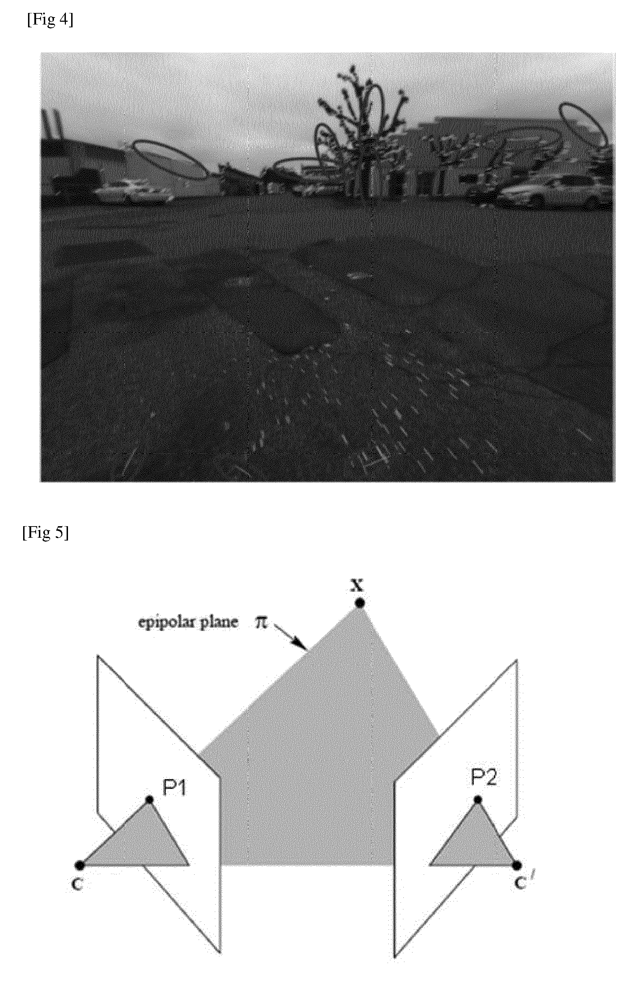

On obtient par exemple le résultat en figure 4. Certains points ne sont pas bien corrélés (points entourés sur la figure). De préférence, les points non ou mal corrélés doivent être éliminés. Un exemple de méthode utilisée pour réaliser cette élimination est expliqué plus loin (cinquième sous-étape 250).

La deuxième étape 200 comprend une quatrième sous-étape 240 qui exploite au moins une relation mathématique entre la première image I1 prise au premier instant t1 et la deuxième image I2 prise au deuxième instant t2, permettant de donner des informations sur la rotation et de la translation du capteur d'image entre les deux prises de vue.

Une première relation mathématique est la matrice fondamentale $F \in \Re^{3 \times 3}$. Une matrice fondamentale

possède les paramètres intrinsèques de la caméra ainsi que sa rotation R et sa translation t. La quatrième sous-étape 240 peut comprendre une étape de détermination de la matrice fondamentale.

La matrice fondamentale est basée sur les propriétés de la géométrie épipolaire entre les deux images, la géométrie épipolaire étant définie comme l'ensemble de relations projectives entre deux images. Si on prend un point **X** dans l'espace (ou « point 3D ») vu par deux images I1 et I2, sa projection dans la première image I1 est donnée par P1 et sa projection dans la deuxième image est donnée par P2, comme l'illustre la figure 5. C représente le centre de la caméra au premier instant t1 et C' le centre de la caméra au deuxième instant t2 (dans le cas où une caméra seule se déplace avec le porteur). La géométrie épipolaire établit que les points **X,** P1, P2, C, C' sont coplanaires (plan épipolaire π).

La matrice fondamentale F doit satisfaire la relation suivante, nommée « relation fondamentale » :

[Math. 4]

$$\mathbf{P2}^{\mathrm{T}}\mathbf{F}\mathbf{P1} = 0$$

Cette relation permet de déterminer la matrice fondamentale.

Les points P1 et P2 correspondent à un même point d'intérêt (l'un est sur la première image I1 et l'autre sur la deuxième image I2). De tels points peuvent être connus. La relation fondamentale est satisfaite si les points sont corrélés. Les points P1 et P2 sont caractérisés par leurs coordonnées x1, y1 et x2, y2 dans le plan de la première image I1 et de la deuxième image I2. En exprimant ces points sous forme de vecteurs : $\boldsymbol{P}1 = [x_1\ y_1\ 1]^{\mathrm{T}}$ et $\mathbf{P}2 = [x_2\ y_2\ 1]^{\mathrm{T}}$, on obtient :

[Math. 5]

$$\begin{bmatrix} x_2 \\ y_2 \\ 1 \end{bmatrix}^{\mathrm{T}} \begin{bmatrix} f_{11} & f_{12} & f_{13} \\ f_{21} & f_{22} & f_{23} \\ f_{31} & f_{32} & f_{33} \end{bmatrix} \begin{bmatrix} x_1 \\ y_1 \\ 1 \end{bmatrix} = 0$$

La formule [Math.5] revient à résoudre un système de plusieurs équations linéaires sous la forme $A_F f = 0$ où $A_F$ est la matrice du système linéaire utilisé pour trouver f. La solution f doit minimiser $\|A_F f\|$ soumise à la condition $\|f\| = 1$.

Ce système de plusieurs équations linéaires peut être résolu en utilisant plusieurs points d'intérêt connus, par exemple en utilisant huit points d'intérêt (ce qui peut être nommé « algorithme à 8 points »).

En pratique, parmi les points d'intérêt, certains ne sont pas bien corrélés entre la première et la deuxième image. Ces points d'intérêt ne vont pas forcément respecter la relation fondamentale. Il est préférable d'éliminer ces points dits « points aberrants » (ou « outliers »), ou du moins de ne pas les utiliser pour résoudre le système à plusieurs équations issu de [Maths.5]. La matrice fondamentale obtenue en éliminant les points aberrants est plus précise. Cela permet d'améliorer la précision de détermination de la rotation et de la translation.

Ainsi, la deuxième étape 200 peut comprendre une cinquième sous-étape 250 d'élimination de points aberrants. Cette cinquième sous-étape 250 peut être réalisée avant, pendant ou après la quatrième sous-étape 240. Elle peut également être réalisée plus largement au cours de la deuxième étape, voire plus largement au cours de toutes les étapes.

La cinquième sous-étape 250 peut mettre en œuvre une méthode de type « RANSAC » qui correspond en anglais à « RANdom SAmpling Consensus » qui est une méthode pour estimer les paramètres de certains modèles mathématiques, surtout quand l'erreur induite par un modèle ne présente pas une distribution gaussienne. En effet, il s'agit d'une méthode itérative utilisé lorsque l'ensemble de données observées peut contenir des valeurs aberrantes (ou « outliers »).

Dans le cas du RANSAC appliqué à l'obtention de la matrice fondamentale, on choisit un certain nombre de points d'intérêt, par exemple huit points au hasard.

On détermine la matrice fondamentale F avec ces points d'intérêt choisis au hasard. Ensuite, on utilise la matrice fondamentale déterminée F pour calculer la distance d(F), qui est la relation fondamentale mais qui est non nulle puisque les points ne sont pas corrélés :

[Math. 6]

$$\mathrm{d}(\mathrm{F}) = \mathbf{P2}^{\mathrm{T}}\mathbf{F}\mathbf{P1}$$

Cette distance est calculée pour l'ensemble des points d'intérêt. Si la distance est plus petite qu'un seuil d(F)max prédéfini, le point d'intérêt est considéré comme corrélé (« inlier »), sinon le point d'intérêt est considéré comme non corrélé, ou aberrant (« outlier »).

Ensuite, on prend aléatoirement de nouveaux points d'intérêt, par exemple huit points au hasard, et on répète les opérations décrites dans les trois paragraphes précédents : on calcule la nouvelle matrice fondamentale F et on calcule les nouvelles distances d(F).

L'opération du paragraphe précédent est de préférence réitérée plusieurs fois. En réalisant cette itération, on obtient une matrice fondamentale qui minimise la distance pour le plus grand nombre de points d'intérêt. On peut fixer un nombre maximal d'itérations et/ou un nombre de points d'intérêt à sélectionner et/ou arrêter les itérations lorsqu'on estime que la matrice fondamentale obtenue est satisfaisante.

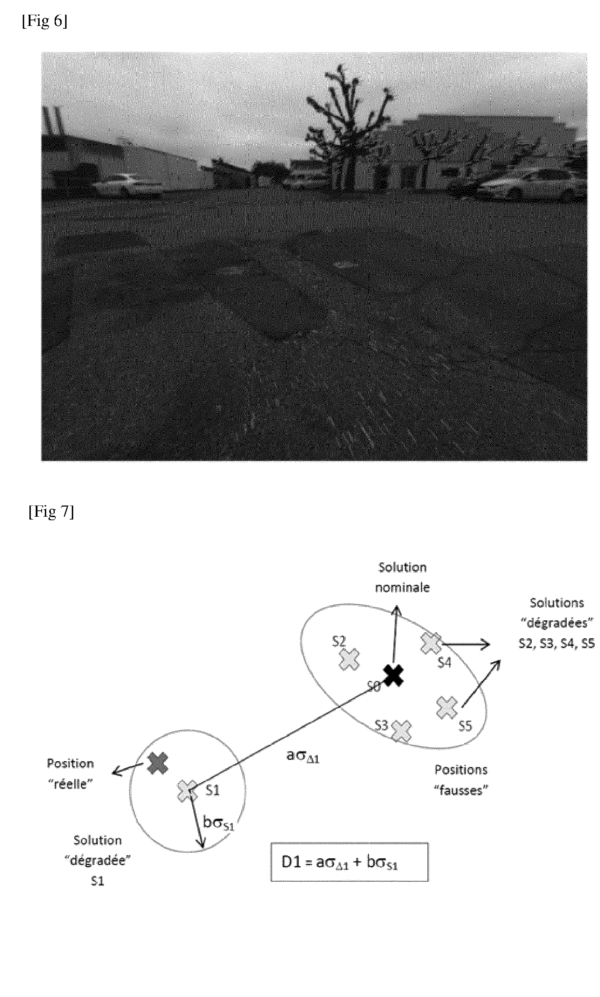

On obtient par exemple le résultat en figure 6, de nombreux points aberrants ayant disparu de l'image.

Une deuxième relation mathématique est la matrice essentielle E qui peut être obtenue à partir de la matrice K de calibration de la caméra. Cela permet d'obtenir un modèle projectif de la caméra. La quatrième sous-étape 240 peut comprendre une étape de détermination de la matrice fondamentale puis une étape de détermination de la matrice essentielle. Alternativement, la quatrième sous-étape 240 peut comprendre une étape de détermination directe de la matrice essentielle. La méthode RANSAC, ou une autre méthode d'élimination de points aberrants, peut être appliquée à l'obtention de la matrice essentielle.

La matrice K de calibration de la caméra est une matrice intrinsèque à la caméra. Elle contient les paramètres de la caméra, comme la distance focale f et les coordonnées plan (px, py, 1) du centre de l'image :

$$[\text{Math. 7}]$$

$$K = \begin{bmatrix} f & & p_x \\ & f & p_y \\ & & 1 \end{bmatrix}$$

La matrice essentielle E est calculée par la relation :

$$[\text{Math. 8}]$$

$$E = K^T F K$$

Par ailleurs, la matrice essentielle E est définie comme étant le produit vectoriel suivant :

$$[\text{Math. 9}]$$

$$E = t_{2D\times} R_{2D}$$

Où $t_{2D\times}$ est la matrice antisymétrique du vecteur de translation t2D 2D-2D entre deux images et R2D est la rotation 2D-2D entre deux images.

La matrice essentielle E possède ainsi de façon intrinsèque l'information de la rotation R2D et de la translation t2D 2D-2D entre les deux images. À partir de la relation [Math. 9] on peut extraire la rotation et la translation dans le plan, c'est à dire sans la profondeur (i.e. sans la côte « z »).

La rotation et la translation ainsi déterminés peuvent être nommées « rotation intermédiaire » et « translation intermédiaire » dans la présente description (et plus généralement de « mouvement intermédiaire » si on parle de mouvement).

La troisième étape 300 permet, une fois la rotation et la translation intermédiaires entre les première et deuxième images obtenues, d'obtenir les points en trois dimensions, typiquement par triangulation. Cette troisième étape permet d'obtenir les coordonnées en 3D des points d'intérêt dont on a comparé les projections sur les première et deuxième images, avec un facteur d'échelle donné. Il est possible de corriger le facteur d'échelle.

Une propriété intéressante de la géométrie épipolaire illustrée en figure 5 et dans le paragraphe de la description correspondant, ainsi qu'une conséquence directe de la relation fondamentale est la suivante : si on respecte la formule [Math.4], c'est-à-dire si **P2**$^T$F**P1** = 0, alors le point **X** (point en 3 dimensions ou « point 3D ») et les points P1, P2 (points de projection sur les première et deuxième images I1 et I2) sont coplanaires. Supposons les matrices $C_1$ = K[I 0] et $C_2$ = K[$R_{2D}$ $t_{2D}$], nommées « matrices caméra », où I est la matrice identité, ceci implique que les relations suivantes (produits vectoriels nuls).

$$[\text{Math. 10}]$$

$$\mathbf{P1} \wedge C_1 \mathbf{X} = 0$$

[Math. 11]

$$P2 \wedge C_2 X = 0$$

Ces relations permettent d'obtenir les points **X** à partir des points de projections P1 et P2 sur les première et deuxième images I1 et I2 et à partir de la rotation et la translation 2D-2D déterminées entre lesdites première et deuxième images (P1 et P2 étant corrélés).

En répétant ce calcul pour tout ou partie des points d'intérêt corrélés entre les première et deuxième images, on reconstruit tous les points 3D (points **X**) et par conséquent on peut aller jusqu'à reconstruire en 3D tout ou partie de la scène capturée par les images.

Les points 3D ainsi obtenus par cette première triangulation sont nommés dans la suite de la description « premiers points 3D ».

La troisième étape 300 peut comprendre en outre une sous-étape 310 d'élimination de points aberrants, en utilisant par exemple la méthode RANSAC.

La quatrième étape 400 a pour objectif de déterminer la rotation et la translation entre les premiers points **X** en 3D et des points d'intérêt dans une troisième image.

Dans la deuxième étape 200, on a utilisé deux images, et les valeurs de translation et de rotation 2D-2D sont déterminées par la comparaison de points d'intérêt entre les deux images. Puis dans la troisième étape 300, on a obtenu les premiers points 3D à partir des points d'intérêt et des valeurs de translation et de rotation 2D-2D déterminés dans la deuxième étape. Le problème est que pour exploiter l'odométrie visuelle dans le cas d'une navigation par vision, on ne se contente pas de comparer deux images et d'obtenir seulement une translation et une rotation entre deux images. En effet on souhaite suivre le porteur sur un intervalle de temps donné qui correspond à (beaucoup) plus que deux images. Ainsi, une navigation par vision nécessite l'acquisition de nouvelles images qu'il faut mettre en relation avec les valeurs de translation et de rotation 2D-2D déterminés et les premiers points 3D obtenus. En outre, le facteur d'échelle de la rotation et de la translation estimées en 2D-2D varie à chaque nouvelle image ajoutée pour obtenir une nouvelle estimation, rendant son utilisation impossible pour des finalités de navigation.

La quatrième étape permet de conserver un même facteur d'échelle lorsqu'une troisième image est ajoutée pour estimer les valeurs finales de rotation et de translation. Elle permet ainsi d'avoir une estimation plus stable de la rotation et de la translation du porteur.

La quatrième étape 400 comprend une première sous-étape 410 apte à déterminer des seconds points 3D à partir des premiers points 3D obtenus et des points d'intérêt dans une troisième image I3.

La première sous-étape 410 peut consister en la résolution du problème dit « P3P » de l'anglais « perspective-3-point », ou plus largement en la résolution du problème « PnP » de l'anglais « perspective-n-point ».

Pour résoudre le problème « P3P », le principe est de déterminer la distance entre les premiers points 3D et le centre de la caméra. En ayant déterminé ces distances, et à partir des points d'intérêt repérés dans une troisième image I3 en relation au moins avec la deuxième image I2 (ou avec la première image I1), on peut remonter à des seconds points 3D et obtenir la rotation et la translation des seconds points 3D par rapport aux premiers points 3D.

Les premiers points 3D sont représentés par $X_i$ et les seconds points 3D sont représentés par $\tilde{X}_i$ (i varie entre 1 et 3 pour un problème P3P, et entre 1 et n pour un problème PnP). Les points d'intérêt dans la troisième image I3 sont représentés par $P3_i$. La distance $d_i$ est la distance entre le point $X_i$ et la caméra C. Le problème PnP consiste donc à déterminer chaque distance $d_i$.

A titre d'exemple, le problème P3P peut consister donc à résoudre le système d'équations suivant :

[Math.12]

$$\begin{cases} d_1^2 + d_2^2 - 2d_1 d_2 \cos\theta_{12} = d_{12}^2 \\ d_1^2 + d_3^2 - 2d_1 d_3 \cos\theta_{13} = d_{13}^2 \\ d_2^2 + d_3^2 - 2d_2 d_3 \cos\theta_{23} = d_{23}^2 \end{cases}$$

Où $d_1 = \|C - X_1\|$, $d_2 = \|C - X_2\|$, $d_3 = \|C - X_3\|$, $\theta_{12} = \widehat{X_1 C X_2}$, $\theta_{13} = \widehat{X_1 C X_3}$ et $\theta_{23} = \widehat{X_2 C X_3}$, $d_{12} - \|X_1 - X_2\|$, $d_{13} = \|X_1 - X_3\|$ et $d_{23} = \|X_2 - X_3\|$.

Les angles $\theta_{12}$, $\theta_{13}$ et $\theta_{23}$ sont obtenus à partir de la matrice de calibration caméra K et des points $P3_1$, $P3_2$, $P3_3$ dans la troisième image :

[Math.13]

$$\cos\theta_{12} = \frac{(K^{-1}P3_1)^T(K^{-1}P3_2)}{\|K^{-1}P3_1\|\,\|K^{-1}P3_2\|}$$

[Math.14]

$$\cos\theta_{13} = \frac{(K^{-1}P3_1)^T(K^{-1}P3_3)}{\|K^{-1}P3_1\|\,\|K^{-1}P3_3\|}$$

[Math.15]

$$\cos\theta_{23} = \frac{(K^{-1}P3_2)^T(K^{-1}P3_3)}{\|K^{-1}P3_2\|\,\|K^{-1}P3_3\|}$$

Alternativement, on peut utiliser une méthode P5P pour obtenir cinq distances di avec 5 points dans la troisième image en utilisant un système $A_d$ de plusieurs équations linéaires :

[Math.16]

$$\begin{bmatrix} a_1^1 & a_2^1 & a_3^1 & a_4^1 & a_5^1 \\ a_1^2 & a_2^2 & a_3^2 & a_4^2 & a_5^2 \\ \vdots & \vdots & \vdots & \vdots & \vdots \\ a_1^5 & a_2^5 & a_3^5 & a_4^5 & a_5^5 \end{bmatrix} \begin{bmatrix} 1 \\ d_1 \\ d_1^2 \\ d_1^3 \\ d_1^4 \end{bmatrix} = A_d d = 0$$

Où les coefficients $a_i^j$ de la matrice $A_d$ sont fonction de $d_{ij}$ et de $\cos\theta_{ij}$ où i et j varient de 1 à 5.

À partir de la décomposition de la matrice $A_d$ en valeurs singulières $A_d = USV^T$, la solution d est donnée par :

[Math.17]

$$d = V(:,5).$$

On trouve $d_1$ à partir des relations :

[Math.18]

$$d_1 = \sqrt{d(2)/d(1)} \text{ ou } \sqrt{d(3)/d(2)} \text{ ou } \sqrt{d(4)/d(3)} \text{ ou } \sqrt{d(5)/d(4)}.$$

On fait de même pour les autres points pour trouver $d_2$, $d_3$, $d_4$ et $d_5$.

Une fois le problème PnP résolu et donc les distances di trouvées, on peut déterminer les seconds points 3D $\tilde{X}_i$ à partir des points $P3_i$ de la troisième image I3, donnés par la formule :

[Math. 19]

$$\tilde{X}_i = d_i \frac{K^{-1}P3_i}{\|K^{-1}P3_i\|}$$

où K est la matrice de calibration de la caméra.

De nombreuses méthodes existent pour résoudre le problème P3P, et plus largement le problème PnP. La plupart reposent sur l'élimination des inconnues par un résultant de Sylvester et ensuite par la résolution d'un système d'équations linéaires.

La quatrième étape 400 comprend en outre une deuxième sous-étape 420 qui consiste en la détermination de la rotation R3D et la translation $t_{3D}$ 3D-2D entre les premiers points 3D $X_i$ et les seconds points 3D $\tilde{X}_i$.

Cette détermination peut être réalisée en utilisant une méthode connue sous le nom de « problème de Procuste ». Le problème de Procuste est un problème de minimisation qui consiste à résoudre l'équation suivante :

[Math. 20]

$$\min_{R,t} \left\| R_{3D}\,\tilde{X}_i + t_{3D} - X_i \right\|^2$$

tout en respectant les deux contraintes suivantes :

[Math. 21]

$$R_{3D}{}^{T}R_{3D} = R_{3D}R_{3D}{}^{T} = I$$

I étant la matrice identité ; et

[Math. 22]

$$\det(R_{3D}) = 1$$

La quatrième étape 400 peut comprendre en outre une troisième sous-étape 430 d'élimination de points aberrants, plus précisément pour obtenir des valeurs de rotation $R_{3D}$ et de translation $t_{3D}$ 3D-2D qui conviennent au plus grand nombre de points d'intérêt, et donc plus précises.

La troisième sous-étape 430 peut comprendre par exemple l'utilisation d'une méthode de type « RANSAC » qui consiste en la minimisation de la distance, pour chaque point image P (qui correspond à une projection sur une image d'un point X en 3D), entre le point $P_{mes}$ mesuré sur une image et le point $P_{est}$ estimé par l'algorithme de vision (en utilisant les valeurs de rotation $R_{3D}$ et de translation $t_{3D}$ 3D-2D obtenues), soit par exemple à minimiser :

[Math. 23]

$$d(R,t) = \sum (P_{mes} - P_{est})^2$$

avec

[Math. 24]

$$\mathbf{P}_{mes} = K^{-1}\mathbf{P}$$

où K est la matrice de calibration de la caméra

[Math. 25]

$$\mathbf{P}_{mes} = \frac{P_{mes}}{\|z_{mes}\|}$$

permettant de normaliser la valeur de Pmes à une profondeur égale à 1

[Math. 26]

$$\mathbf{p}_{est} = K[R_{3D} \quad t_{3D}]$$

**X** où K est la matrice de calibration de la caméra

[Math. 27]

$$\mathbf{P}_{est} = \frac{P_{est}}{\|z_{est}\|}$$

permettant de normaliser la valeur de $P_{est}$ à une profondeur égale à 1

La quatrième étape 400 permet donc d'obtenir la rotation et la translation de la caméra à partir d'une troisième image et des premiers points 3D calculés pour les première et seconde images.

La rotation et la translation ainsi déterminés (également désignés par rotation et translation « 3D-2D ») peuvent être nommées « rotation finale » et « translation finale » dans la présente description (et plus généralement de « mouvement final » si on parle de mouvement).

Ensuite, on peut réaliser une étape supplémentaire de triangulation (à partir des deuxième et troisième images corrélées, de la rotation et de la translation obtenues en 3D-2D), de manière à redéfinir des seconds points 3D, puis une étape supplémentaire de détermination de la rotation et de la translation entre les seconds points 3D et des points d'intérêt dans une quatrième image I4 en résolvant un nouveau PnP. Plus généralement, on peut reproduire des étapes supplémentaires de triangulation et de PnP de manière itérative lors de l'acquisition de nouvelles images afin d'estimer à chaque fois la rotation et la translation. En effet, au fur et à mesure du mouvement du porteur de caméra et de l'acquisition de nouvelles images, les points d'intérêt communs à toutes les images diminuent, jusqu'à ne plus exister (la scène vue par la caméra va évoluer). Pour pouvoir continuer à suivre le mouvement, il faut ajouter des points d'intérêt communs aux dernières images acquises (et donc plus nécessairement communs aux images précédemment acquises), et faire en sorte d'avoir un facteur d'échelle cohérent avec les images précédentes.

La deuxième étape de détermination de la rotation et de la translation 2D-2D est en fait utilisée juste pour initialiser le calcul, puisqu'à partir du moment où on a déterminé des premières valeurs finales de rotation et de translation 3D-2D, à l'issue de la quatrième étape, on va utiliser ces premières valeurs dans une première itération, puis on va utiliser les valeurs de rotation et de translation 3D-2D obtenues pour une prochaine itération, et ainsi de suite. Ainsi cela permet de suivre le mouvement du porteur de la caméra au fur et à mesure des prises d'images.

Un exemple de système de navigation basé sur la vision intégrant un calculateur d'intégrité dudit système comprend les éléments illustrés en figure 2 :

- un capteur d'image 11 disposé sur un porteur et permettant de réaliser au moins une première image I1 à un premier instant t1 et une deuxième image I2 à un deuxième instant t2 ;
- une unité de traitement 21 couplée au capteur d'image 11 et adapté à implémenter une méthode de traitement apte à calculer une translation t et/ou une rotation R du porteur (ou plus généralement un mouvement) entre le premier instant t1 et le deuxième instant t2 à partir de la première image I1 et de la deuxième image I2 ;
- un module de calcul d'intégrité 31 couplé à l'unité de traitement 21 et permettant de calculer un rayon de protection D ;
- une unité d'affichage 41 permettant d'afficher la translation t et la rotation R calculées ainsi que le rayon de protection D ;

Le module de calcul d'intégrité 31 peut être intégré dans l'unité de traitement, ou peut être distinct.

En outre, il faut comprendre que, bien qu'une seule unité de traitement 21 soit représentée sur la figure 2, l'unité de traitement 21 peut comprendre plusieurs processeurs, chaque processeur étant chargé d'exécuter une tâche particulière. Il en va de même pour le module de calcul d'intégrité.

L'unité de traitement 21 et/ou le module de calcul d'intégrité 31 incluent ou fonctionnent avec des programmes logiciels ou autres instructions lisibles par ordinateur pour exécuter les étapes et sous-étapes de la méthode de traitement et/ou de la méthode de détermination du rayon de protection.

La méthode de traitement 51 met en œuvre a minima les mêmes étapes que celles décrites précédemment notamment en référence à la figure 8, à savoir :

- une première étape 100 d'acquisition et/ou de traitement d'au moins une première image I1 prise à un premier instant t1 et une deuxième image I2 prise à un deuxième instant t2 ;
- une deuxième étape 200 de détermination de la rotation et de la translation intermédiaires entre la première image I1 et la deuxième image I2 (rotation et translation « 2D-2D »);
- une troisième étape 300 d'obtention de premiers points 3D à partir des première et deuxième images ;
- une quatrième étape 400 de détermination de la rotation et de la translation finales à partir des premiers points 3D obtenus et d'une troisième image I3 prise à un troisième instant t3 (rotation et translation « 3D-2D »).

En outre, toutes les sous-étapes décrites précédemment peuvent s'appliquer à un exemple de système de navigation basé sur la vision intégrant une unité de calcul d'intégrité.

En outre, la méthode de traitement 51 peut comprendre :

- une cinquième étape 500 de calcul de l'incertitude induite par un bruit au niveau d'une parmi la première ou la deuxième image sur la rotation et/ou la translation finale.

Par « bruit », il faut comprendre les variations ou « petites erreurs » aléatoires qui s'ajoutent lors de l'acquisition d'une image par un capteur d'image. En effet, lors de l'acquisition d'une mesure physique à partir d'un capteur, des défauts viennent s'ajouter à la grandeur mesurée.

Le principe est de caractériser le bruit au niveau d'une image, typiquement de déterminer son écart-type $\sigma$, puis de propager l'incertitude induite par ce bruit sur les grandeurs intermédiaires nécessaires à la détermination de la rotation et/ou de la translation finales de manière à déterminer les incertitudes sur les valeurs finales de rotation et/ou de translation.

Typiquement, on propage l'incertitude induite par le bruit sur les grandeurs intermédiaires qui sont déterminées lors du déroulement des étapes et sous-étapes d'une méthode de traitement (algorithme de vision) afin de déterminer les incertitudes sur les valeurs finales de rotation et/ou de translation obtenues.

Comme illustré en figure 2, l'unité de traitement 21 peut implémenter ces étapes de propagation du bruit de manière à obtenir les incertitudes $\Sigma$.

Une incertitude est de préférence définie par la covariance. En particulier, une incertitude peut être déterminée sous la forme d'une matrice de covariance.

Un mode de réalisation de la cinquième étape 500 est décrit ci-après, notamment en référence à la figure 8.

Selon ce mode de réalisation de la cinquième étape, l'incertitude induite et propagée est déterminée sous la forme d'une matrice de covariance de la rotation et d'une matrice de covariance de la translation.

D'autres méthodes sont possibles. Ainsi, au lieu calculer l'incertitude sous forme de covariance, on peut la calculer par le résidu de la solution, par exemple le résidu d'une solution de moindres carrés.

Le terme « cinquième » étape ne sous-entend pas que ladite étape intervienne nécessairement après les autres étapes. Ainsi, ladite cinquième étape peut comprendre plusieurs sous-étapes dont certaines peuvent être implémentées avant, pendant ou après l'une ou l'autre des sous-étapes des deuxième, troisième et quatrième étapes décrites plus avant.

Par exemple, toujours en référence aux étapes décrites plus avant dans la présente description, on propage l'incertitude induite par le bruit sur la rotation et la translation intermédiaires (2D-2D), puis on propage l'incertitude induite par la rotation et la translation intermédiaires sur les premiers points 3D générés par triangulation, puis on propage l'incertitude induite par les premiers points 3D sur les seconds points 3D générés par un algorithme P3P ou PnP, et enfin on propage l'incertitude induite par les seconds points 3D sur la rotation et la translation finales (3D-2D).

La cinquième étape 500 peut comprendre une première sous-étape 510 de caractérisation du bruit au niveau d'au moins une parmi la première et la deuxième image. Cela permet d'obtenir par exemple une matrice de covariance du bruit.

Lorsque le calcul de la rotation et de la translation intermédiaires est basé sur la détermination de la matrice fondamentale F et/ou de la matrice essentielle E, comme cela est décrit plus avant dans la présente description, la cinquième étape 500 peut comprendre une deuxième sous-étape 520 de détermination de la propagation du bruit à la matrice fondamentale F et/ou à la matrice essentielle E. La deuxième sous-étape peut en particulier être réalisée en déterminant la covariance de la matrice fondamentale F et/ou la covariance de la matrice essentielle E.

A titre d'exemple, soit $\Sigma_\sigma$ la matrice de covariance du bruit au niveau des points obtenue à l'issue de la première sous-étape 510 :

$$[\mathrm{Math.}\ 28]$$

$$\Sigma_\sigma = \begin{bmatrix} \sigma^2 & & \\ & \ddots & \\ & & \sigma^2 \end{bmatrix}$$

Où $\sigma$ est l'écart-type du bruit au niveau des points d'intérêt.

Alors la covariance de f est donnée par :

[Math.29]

$$\Sigma_f = J_{A_F} \Sigma_\sigma J_{A_F}^T$$

Où $J_{A_F}$ est la matrice Jacobéenne de la matrice $A_F$ du système linéaire utilisé pour trouver f On peut maintenant calculer la matrice de covariance de la matrice fondamentale désignée $\Sigma_F$ :

[Math.30]

$$\Sigma_F = J_F \begin{bmatrix} \Sigma_f & 0 \\ 0 & 0 \end{bmatrix} J_F^T$$

Où $J_F$ est la matrice Jacobéenne de la décomposition en valeur singulière (« SVD ») utilisée pour calculer la matrice fondamentale F.

La covariance de la matrice essentielle E désignée $\Sigma_E$ est la covariance de F multipliée par une constante. Elle est donc égale à covariance de F, soit :

[Math.31]

$$\Sigma_E = \Sigma_F$$

La cinquième étape 500 peut comprendre en outre une troisième sous-étape 530 de propagation du bruit de la matrice essentielle E aux valeurs intermédiaires de translation $t_{2D}$ et de rotation $R_{2D}$. La troisième sous-étape 530 peut être réalisée en déterminant la covariance de ladite rotation intermédiaire et la covariance de ladite translation intermédiaire.

A titre d'exemple, la rotation et la translation intermédiaires peuvent être déduits de la matrice essentielle E à partir de sa décomposition en valeurs singulières :

[Math.32]

$$E = USV^T$$

Alors la rotation intermédiaire $R_{2D}$ est donnée par :

[Math.33]

$$R_{2D} = UWV^T \text{ ou } UW^TV^T$$

$$\text{Où } W = \begin{bmatrix} 0 & -1 & 0 \\ 1 & 0 & 0 \\ 0 & 0 & 1 \end{bmatrix}$$

En outre, la translation intermédiaire $t_{2D}$ est donnée par :

[Math.34]

$$t_{2D} = \pm U(:,3) \text{ ou } t = \pm UZU^T$$

$$\text{Où } Z = \begin{bmatrix} 0 & 1 & 0 \\ -1 & 0 & 0 \\ 0 & 0 & 0 \end{bmatrix}$$

La covariance de la rotation intermédiaire $\Sigma_{R_{2D}}$ est donnée par :

[Math.35]

$$\Sigma_{R_{2D}} = \frac{\partial(UWV^T)}{\partial E} \Sigma_E \frac{\partial(UWV^T)}{\partial E}^T$$

Et la dérivée de $UWV^T$ est donnée par :

[Math.36]

$$\frac{\partial(UWV^T)}{\partial e_{ij}} = \frac{\partial U}{\partial e_{ij}} WV^T + UW \frac{\partial V^T}{\partial e_{ij}}$$

Où $e_{ij}$ sont les éléments de la matrice essentielle E

La covariance de la translation intermédiaire $\Sigma_{t_{2D}}$ est donnée par :

[Math.37]

$$\Sigma_{t_{2D}} = \frac{\partial(U_3)}{\partial E} \Sigma_E \frac{\partial(U_3)}{\partial E}^T$$

où $U_3 = U(:,3)$.

La cinquième étape 500 peut comprendre en outre une quatrième sous-étape 540 de propagation du bruit des valeurs intermédiaires de translation $t_{2D}$ et de rotation $R_{2D}$ aux premiers points 3D X.

A titre d'exemple, on a vu plus avant qu'on pouvait obtenir un point 3D par une méthode de triangulation, de la façon suivante :

[Math. 10]

$$\mathbf{P1} \wedge C_1 \mathbf{X} = 0$$

[Math. 11]

$$\mathbf{P2} \wedge C_2 \mathbf{X} = 0$$

Où $P1 = [x_1\, y_1\, 1]^T$ et $\mathbf{P2} = [x_2\, y_2\, 1]^T$ sont les points d'intérêt dans les première et deuxième images I1 et I2 et $\mathbf{X}$ est un point 3D.

On peut écrire le problème comme un système linéaire :

[Math.38]

$$A_X \mathbf{X} = 0$$

où $A_X = \begin{bmatrix} \mathbf{P1} \times C_1 \\ \mathbf{P2} \times C_2 \end{bmatrix}$ est la matrice du système linéaire utilisé pour trouver un point 3D $\mathbf{X}.$

À partir de la décomposition en valeurs singulières de $A_X$ comme suit :

[Math.39]

$$A_X = USV^T\ ;$$

La solution $\mathbf{X}$ est donnée par la dernière colonne de V soit $\mathbf{X} = V(:,4)$. On désigne $V_4 = V(:,4)$.

L'équation $A_X \mathbf{X} = 0$ configure une fonction implicite. La covariance de X est donc donnée par :

[Math.40]

$$J_X \Sigma_X J_X^T = J_{A_X} \Sigma_{A_X} J_{A_X}^T$$

Où $J_X$ est la Jacobéenne de la décomposition en valeurs singulières de la solution de **X** obtenue par triangulation, $\Sigma_X$ est la covariance du point 3D **X**, $\Sigma_{A_X}$ est la matrice de covariance composée par les covariances des points dans les images, par la covariance de la rotation et de la translation intermédiaires et $J_{A_X}$ est sa Jacobéenne.

De façon simplifiée, on peut trouver la covariance $\Sigma_X$ en réalisant l'inversion de $J_X$ suivante :

[Math.41]

$$\Sigma_X = J_X^{-1} J_{A_X} \Sigma_{A_X} J_{A_X}^T (J_X^{-1})^T$$

De manière plus rigoureuse, on peut trouver la covariance $\Sigma_X$ à partir de la solution du système d'équations linéaires $A_X \mathbf{X} = 0$ et **X** donné par $V_4 = V(:,4)$ de manière à obtenir la solution :

[Math.42]

$$\Sigma_X = \frac{\partial V_4}{\partial a_{ij}} J_{A_X} \Sigma_{A_X} J_{A_X}^T \frac{\partial V_4}{\partial a_{ij}}^T$$

Où $a_{ij}$ sont les éléments de la matrice $A_X$

La cinquième étape 500 peut comprendre en outre une cinquième sous-étape 550 de propagation entre les premiers points 3D obtenus par triangulation et les distances di obtenues par le P3P ou le PnP.

Par exemple, le problème P3P ou le PnP peut être déterminé comme indiqué plus avant par le système d'équations :

[Math.12]

$$\begin{cases} d_1^2 + d_2^2 - 2d_1 d_2 \cos\theta_{12} = d_{12}^2 \\ d_1^2 + d_3^2 - 2d_1 d_3 \cos\theta_{13} = d_{13}^2 \\ d_2^2 + d_3^2 - 2d_2 d_3 \cos\theta_{23} = d_{23}^2 \end{cases}$$

Ceci résultant en le système d'équations linéaires suivant :

[Math.16]

$$\begin{bmatrix} a_1^1 & a_2^1 & a_3^1 & a_4^1 & a_5^1 \\ a_1^2 & a_2^2 & a_3^2 & a_4^2 & a_5^2 \\ \vdots & \vdots & \vdots & \vdots & \vdots \\ a_1^5 & a_2^5 & a_3^5 & a_4^5 & a_5^5 \end{bmatrix} \begin{bmatrix} 1 \\ d_1 \\ d_1^2 \\ d_1^3 \\ d_1^4 \end{bmatrix} = A_d d = 0$$

Où les coefficients $a_i^j$ de la matrice $A_d$ sont fonction de $d_{ij}$ et de $\cos\theta_{ij}$.

À partir de la décomposition en valeurs singulières $A_d = USV^T$, la solution d est donnée par :

[Math.17]

$$d = V(:,5).$$

Comme il s'agit d'une fonction implicite, on peut calculer la covariance $\Sigma_d$ de la solution de d comme suit :

[Math.43]

$$\Sigma_d = \frac{\partial(V_5)}{\partial A_d} J_{A_d} \Sigma_{A_d} J_{A_d}^T \frac{\partial(V_5)}{\partial A_d}^T$$

Où $V_5 = V(:,5)$ et où $J_{A_d}$ est la matrice Jacobéenne de $A_d$ et $\Sigma_{A_d}$ sa covariance.

Le problème consiste à déterminer $J_{A_d} \Sigma_{A_d} J_{A_d}^T$, avec $\Sigma_{A_d}$ donné par :

[Math.44]

$$\Sigma_{A_d} = \begin{bmatrix} \mathrm{diag}(\sigma^2) & 0 \\ 0 & \Sigma_X \end{bmatrix}$$

Où $\sigma$ est l'écart-type du bruit appliqué à des points d'intérêt dans une des images.

La cinquième étape 500 peut comprendre ensuite une sixième sous-étape 560 de propagation du bruit aux seconds points 3D $\tilde{X}_i$ qui sont déterminés à partir des distances $d_i$ et de points $P3_i$ dans une troisième image I3, comme indiqué plus avant, par la formule :

[Math. 19]

$$\tilde{X}_i = d_i \frac{K^{-1} P3_i}{\|K^{-1} P3_i\|}$$

Le calcul de la covariance $\Sigma_{\tilde{X}}$ des seconds points 3D $\tilde{X}_i$ à partir de la covariance des distances $\Sigma_d$ est le suivant :

[Math.45]

$$\Sigma_{\tilde{X}} = J_{\tilde{X}} \begin{bmatrix} \Sigma_d & \\ & \mathrm{diag}(\sigma^2) \end{bmatrix} J_{\tilde{X}}^T$$

Où $J_{\tilde{X}} = \begin{bmatrix} \frac{\partial \tilde{X}}{\partial d_1} & \frac{\partial \tilde{X}}{\partial d_2} & \cdots & \frac{\partial \tilde{X}}{\partial x_1} & \frac{\partial \tilde{X}}{\partial x_2} & \cdots \end{bmatrix}$ est la Jacobéenne des seconds points 3D $\tilde{X}$.

La cinquième étape 500 peut comprendre ensuite une septième sous-étape 570 de propagation de bruit des seconds points $\tilde{X}_i$ aux valeurs de translation et de rotation finales.

A titre d'exemple, et comme décrit plus avant, la détermination de la rotation $R_{3D}$ et la translation $t_{3D}$ entre les premiers points 3D $X_i$ et les seconds points 3D $\tilde{X}_i$ peut être réalisée en utilisant le problème de Procuste, qui consiste à résoudre l'équation suivante :

[Math. 20]

$$\min_{R,t} \|R_{3D} \tilde{X}_i + t_{3D} - X_i\|^2$$

Pour résoudre le problème de Procuste, on peut au préalable déterminer le « barycentre » des points $X_i$ et le « barycentre » des points $\tilde{X}_i$ à l'aide des formules suivantes :

[Math.46]

$$B_X = \frac{1}{N}\sum_{i=1}^{N} X_i$$

[Math.47]

$$B_{\widetilde{X}} = \frac{1}{N}\sum_{i=1}^{N} \widetilde{X}_i$$

Où N est le nombre de premiers et seconds points 3D (par exemple cinq premiers points 3D et cinq seconds points 3D).

On calcule la covariance croisée H entre $B_X$ et $B_{\widetilde{X}}$ donnée par la formule :

[Math.48]

$$H = (\widetilde{X} - B_{\widetilde{X}})(X - B_X)^T$$

Si on décompose cette covariance croisée en valeurs singulières $H = USV^T$, la rotation finale $R_{3D}$ est donnée par :

[Math.49]

$$R_{3D} = UV^T$$

La covariance $\Sigma_{R_{3D}}$ de la rotation finale est donnée par la formule :

[Math.50]

$$\Sigma_{R_{3D}} = \frac{\partial(UV^T)}{\partial H} \Sigma_H \frac{\partial(UV^T)^T}{\partial H}$$

La dérivée de $UV^T$ étant donnée par :

[Math.51]

$$\frac{\partial(UV^T)}{\partial h_{ij}} = \frac{\partial U}{\partial h_{ij}} V^T + U \frac{\partial V^T}{\partial h_{ij}}$$

Où hij sont les éléments de la matrice H

La matrice de covariance $\Sigma_H$ est calculée comme suit :

[Math.52]

$$\Sigma_H = J_H \begin{bmatrix} \Sigma_{\widetilde{X}} & \\ & \Sigma_X \end{bmatrix} J_H^T$$

Où $J_H$ est la matrice Jacobéenne de H.

En outre, la translation finale $t_{3D}$ est donnée par :

[Math.53]

$$t_{3D} = B_{\widetilde{X}} - R_{3D}B_X$$

On peut donc effectuer ses dérivées partielles :

[Math.54]

$$\frac{\partial t_{3D}}{\partial t_{ij}} = \frac{\partial B_{\widetilde{X}}}{\partial t_{ij}} - R_{3D}\frac{\partial B_X}{\partial t_{ij}} - \frac{\partial R}{\partial t_{ij}}B_X$$

Le terme $\dfrac{\partial R_{3D}}{\partial t_{ij}}$ est développé comme précédemment :

[Math.55]

$$\frac{\partial R_{3D}}{\partial h_{ij}} = \frac{\partial(UV^T)}{\partial h_{ij}} = \frac{\partial U}{\partial h_{ij}}V^T + U\frac{\partial V^T}{\partial h_{ij}}$$

Ainsi la covariance $\Sigma_{t_{3D}}$ de la translation finale est donnée par :

[Math.56]

$$\Sigma_{t_{3D}} = \left(\Sigma_{\widetilde{X}} + R_{3D}\Sigma_X R_{3D}{}^T\right) + \frac{\partial(UV^T)}{\partial h_{ij}}\Sigma_X\frac{\partial(UV^T)^T}{\partial h_{ij}}$$

Ainsi on obtient la matrice de covariance de la rotation finale et la matrice de covariance de la translation finale du système de navigation par vision. Selon l'invention, une telle matrice est nommée « matrice nominale de covariance de la translation » ou « matrice nominale de covariance de la rotation ».

Le module de calcul d'intégrité 31 permet d'implémenter une méthode de calcul d'intégrité (qui peut être nommée « algorithme d'intégrité »), et plus précisément une méthode de détermination 600 d'un rayon de protection du système de navigation par vision.

Lorsque le module de calcul d'intégrité 31 fait partie de l'unité de traitement 21, la méthode de calcul d'intégrité peut être intégrée dans la méthode de traitement (par exemple en un seul algorithme). Dans ce cas, la méthode de détermination d'un rayon de protection peut être une sixième étape 600 d'une méthode de traitement 52, comme cela est représenté en figure 8. En particulier, la méthode de calcul d'intégrité peut exploiter des étapes et/ou sous-étapes de l'algorithme de vision, notamment, mais pas exclusivement, la cinquième étape de détermination des matrices de covariance de la rotation et de la translation finales.

Selon le mode de réalisation présenté ci-après, la méthode de calcul d'un rayon de protection est basée uniquement sur la détermination de matrices de covariance de la translation finale (et non sur la détermination de matrices de covariance de la rotation finale en plus de celle de la translation finale). Dans ce cas, la matrice nominale de covariance de la translation est nommée par simplification « matrice nominale de covariance » ou « matrice nominale ».

Alternativement ou complémentairement, la méthode de calcul d'un rayon de protection peut être basée sur la détermination de la matrice de covariance de la rotation.

En outre, selon le mode de réalisation présenté, il est procédé à plusieurs calculs de covariance de la translation pour des i-èmes sous-ensembles, un sous-ensemble étant typiquement obtenu en enlevant un ensemble de points d'intérêt et/ou, si on utilise un ensemble de plusieurs capteurs d'images, en enlevant au moins un capteur.

Ainsi, selon le mode de réalisation présenté, le principe de la méthode de détermination du rayon de protection est d'exécuter l'algorithme de vision afin d'obtenir une sous-matrice de covariance de la translation finale, et ce pour un sous-ensemble obtenu en enlevant un ensemble de points d'intérêt et/ou, si on utilise un ensemble de plusieurs capteurs d'images, en enlevant au moins un capteur d'images. Selon l'invention, cette matrice est nommée « sous-matrice de covariance de la translation » ou encore par simplification « sous-matrice de covariance » ou « sous-matrice ».

On peut ensuite comparer la sous-matrice avec la matrice nominale. En réitérant ces opérations plusieurs (M) fois, on obtient plusieurs (M) sous-matrices de covariance qui sont exploitées pour obtenir une valeur de rayon de protection du système de navigation par vision.

Un exemple de méthode 600 de calcul du rayon de protection peut comprendre les étapes suivantes, notamment en référence à la figure 8 :

- une première étape 610 d'exécution de l'algorithme de vision de manière à obtenir une matrice nominale de covariance $\Sigma_{t3D}$ de la translation.

La matrice nominale de covariance de la translation peut être obtenue à l'aide des étapes et sous-étapes décrites plus avant dans la présente description détaillée, et notamment par l'équation [Math.56].

Ensuite, l'exemple de méthode 600 de calcul du rayon de protection comprend, pour chaque i-ème sous-ensemble Si avec i variant entre 1 et M, qui est un sous-ensemble correspondant au système de navigation par vision pour lequel on a enlevé une i-ème partie des points d'intérêt et/ou, si on utilise un ensemble de plusieurs capteurs d'images, au moins un i-ème capteur :

- une deuxième étape 620 d'exécution de l'algorithme de vision de manière à obtenir une i-ème sous-matrice de covariance de la translation $\Sigma_{tSi}$ (pouvant être nommée « i-ème sous-matrice de covariance » ou « i-ème sous-matrice ») ;
- une troisième étape 630 de détermination d'un i-ème rayon de protection $D_i$ qui peut comprendre les sous-étapes suivantes :

  - une première sous-étape 631 de détermination d'une i-ème matrice $\Delta_i$ des différences entre la matrice nominale et la i-ème sous-matrice, soit $\Delta_i = \Sigma_t - \Sigma_{tSi}$ (pouvant être nommée « i-ème matrice différence ») ;
  - une seconde sous-étape 632 de calcul de la i-ème plus grande valeur d'écart-type de la i-ème matrice différence (pouvant être nommée « i-ème écart-type différence » ou « i-ème écart-type des différences »), soit
    $$\sigma_{\Delta i} = \sqrt{\max(\lambda_{\Delta i}(\Delta_i))}$$ où $\lambda_{\Delta i}$ est la valeur propre de la i-ème matrice différence $\Delta_i$ ;
  - de préférence, une troisième sous-étape 633 de calcul d'une i-ème valeur corrigée $D_{\Delta i}$ égale au i-ème écart-type différence $\sigma_{\Delta i}$ multiplié par une première constante de pondération, soit $D_{\Delta i} = a \times \sigma_{\Delta i}$ (pouvant être nommée « i-ème écart-type différence corrigé » ou « i-ème écart-type des différences corrigé ») où a est ladite première constante de pondération ;
  - de préférence, une quatrième sous-étape 634 de calcul de la i-ème plus grande valeur d'écart-type de la i-ème sous-matrice (pouvant être nommée « i-ème écart-type »), soit $$\sigma_{Si} = \sqrt{\max(\lambda_{Si}(\Sigma_{tSi}))}$$ où $\lambda_{Si}$ est la valeur propre de la i-ème matrice dégradée $\Delta_{Si}$;
  - de préférence, une cinquième sous-étape 635 de calcul d'une i-ème valeur corrigée $D_{Si}$ égale au i-ème écart-type $\sigma_{Si}$ multiplié par une seconde constante de pondération, soit $D_{Si} = b \times \sigma_{Si}$ (pouvant être nommée « i-ème sous-écart-type corrigé ») où b est ladite seconde constante de pondération ;
  - une sixième sous-étape 636 de calcul de la valeur d'un i-ème rayon de protection $D_i$ pour le sous-ensemble Si comme étant soit le i-ème écart-type différence éventuellement corrigé, soit la somme du i-ème écart-type différence éventuellement corrigé et du i-ème écart-type éventuellement corrigé, soit par exemple $D_i = D_{\Delta i} + D_{Si}$.

Enfin, l'exemple de méthode 600 de calcul du rayon de protection comprend :

- une quatrième étape 640 de calcul de la valeur du rayon de protection D comme étant le plus grand des rayons de protection obtenus pour les sous-ensemble $S_i$, soit $D = \max_{i=1...M} D_i$.

Les sous-matrices de covariance de la translation peuvent également être obtenues à l'aide des étapes et sous-étapes décrites plus avant dans la présente description détaillée, et ce pour chaque sous-ensemble Si, et notamment par l'équation [Math.56].

Dans le cas où la méthode de calcul d'un rayon de protection prend en compte la covariance de la rotation, les première à troisième étapes de ladite méthode de calcul décrites dans les paragraphes précédents, ainsi que la quatrième étape peuvent s'appliquer à la matrice nominale de covariance de la rotation et aux sous-matrices de covariance de la rotation, lesquelles peuvent également être obtenues à l'aide des étapes et sous-étapes décrites plus avant dans la présente description détaillée pour le système de navigation et pour chaque sous-ensemble Si, et notamment l'équation [Math.55].

La valeur de la première constante de pondération a peut être égale à 1 et dans ce cas : $D_{\Delta i} = \sigma_{\Delta i}$.

Alternativement, la valeur de la première constante de pondération a peut être définie par l'utilisateur. Par exemple, cette valeur de a peut être obtenue à partir de la probabilité de fausse alarme (PFA) du système de navigation en utilisant une distribution du $\chi^2$ :

[Math.57]

$$a^2 = \text{FDF}^{-1}\left(1 - \left(\frac{\text{PFA}}{\text{M}}\right), 1\right) = \left\{a^2 : \text{PDF}(a^2, 1) = \frac{\text{PFA}}{\text{M}}\right\}$$

Où PDF est la fonction de probabilité de densité de la distribution $\chi^2$ et M est le nombre de sous- ensembles Si.

La valeur de la seconde constante de pondération b peut être égale à 1 et dans ce cas $D_{Si} = \sigma_{Si}$ être égale à 0 et dans ce cas $D(i) = D_{\Delta i}$.

Alternativement, la valeur de b peut être définie par l'utilisateur. Par exemple la constante b peut être obtenue à partir de la probabilité de non-détection (PND) du système de navigation en utilisant une distribution du $\chi^2$ :

[Math.58]

$$b^2 = \text{PDF}^{-1}(1 - \text{PND}, 1)$$

La figure 7 illustre un exemple de calcul du rayon de protection d'un sous-ensemble. Dans ce cas simplifié, il y a 5 sous-ensembles S1 à S5, l'ensemble S0 correspondant au système de navigation nominal, ce qui correspond dans l'exemple au système de navigation avec tous les points d'intérêt. Le calcul du rayon de protection $D_1$ du sous-ensemble $S_1$ donne D1 = $a\sigma\Delta 1$ + $b\sigma$S1.

Le même calcul est fait pour chaque autre sous-ensemble S2 à S5.

Il s'avère dans cet exemple que lorsqu'on omet des points d'intérêt pour obtenir le sous-ensemble $S_1$ on obtient un résultat qui est le plus proche de la position réelle.

Ainsi la méthode selon l'invention permet de déterminer une valeur du rayon de protection du système de navigation par vision. Ceci permet par exemple à un corps en mouvement de naviguer avec une information de position intègre afin d'éviter des obstacles fixes (le relief montagneux, les bâtiments d'une ville ...) et mobiles (aéronefs, véhicules, piétons ...).

La précision de cette détermination dépend du nombre M et de la sélection des sous-ensembles, qui peuvent être déterminés en fonction du système de navigation (et donc de la méthode de traitement) mis en œuvre.

La méthode selon l'invention peut s'adapter en fonction du système de navigation mis en œuvre, puisque le principe de la méthode est de calculer des incertitudes des valeurs de mouvement obtenues par la méthode de traitement (quelle que soit la méthode). Le mode de calcul de ces incertitudes peut se faire d'autres manières que celles indiquées précédemment, et l'homme du métier œuvrant dans le domaine de l'invention saura adapter le mode de calcul des incertitudes en fonction de la méthode de traitement utilisée.

Il est très avantageux de pouvoir connaître de manière précise le rayon de protection du système de navigation par vision. La précision recherchée dépend notamment du domaine auquel le système de navigation est destiné.

La méthode selon l'invention s'applique quel que soit le système de navigation par vision mis en œuvre : embarqué, fixe, un capteur, plusieurs capteurs ...

La méthode selon l'invention permet de garantir ou de vérifier si un système de navigation par vision répond aux contraintes, normes et/ou standards d'utilisation dans certains domaines d'application, dont certains peuvent être particulièrement exigeants.

Les domaines d'application de l'invention peuvent être, entre autres, ceux de la navigation aéronautique, de la navigation terrestre, de la navigation spatiale, de la navigation maritime et sous-marine.

En particulier, un système de navigation par vision peut servir de système de navigation relais lorsqu'un système de navigation par satellite ne peut plus être utilisé (par exemple pour la navigation au sol pour un avion) ou lorsqu'il devient défaillant (par exemple pour la navigation en altitude pour un avion en cas de perte d'un ou de plusieurs satellites).

Un système de navigation par vision peut également être un système de navigation principal, par exemple lorsqu'il s'agit d'éviter tout risque de masquage, de brouillage (par exemple pour la livraison de colis par drone).

La méthode selon l'invention permet en outre de savoir s'il est nécessaire de corriger le soft (paramètres dans l'algorithme de vision ...) ou d'améliorer le hard (caméra ...).

Les différents modes (étapes, sous-étapes, exemples, variantes ...) présentés peuvent être combinés entre eux.

En outre, la présente invention n'est pas limitée aux modes de réalisation précédemment décrits mais s'étend à tout mode de réalisation entrant dans la portée des revendications.

**Revendications**

1. Méthode (600) de détermination d'un rayon de protection (D) d'un système de navigation par vision, ledit système comprenant :

   - au moins un capteur d'images (11) adapté à réaliser au moins une première image (I1) à un premier instant (t1) et une deuxième image (I2) à un deuxième instant (t2) ; et
   - une unité de traitement (21) couplée à chaque capteur d'images (11) et adapté à implémenter une méthode de traitement (50, 51, 52) adapté à déterminer au moins une valeur de mouvement entre le premier instant (t1) et le deuxième instant (t2) à partir de la première image (I1) et de la deuxième image (I2) et d'une pluralité de données images déterminées sur les au moins première et deuxième images, les données images comprenant des coordonnées d'une pluralité de points d'intérêt sur au moins la première image (I1) et la deuxième image (I2), ladite méthode de détermination d'un rayon de protection comprenant les étapes suivantes :

      - une première étape (610) de détermination d'au moins une valeur nominale d'incertitude de la au moins une valeur de mouvement obtenue par la méthode de traitement pour un ensemble (S) comprenant la pluralité de données images déterminées ;

   **caractérisée en ce que** la méthode comprend les étapes suivantes:

      - une seconde étape (620) de détermination de i-èmes sous-valeurs d'incertitude de la au moins une valeur de mouvement déterminée par la méthode de traitement pour un i-ème sous-ensemble (Si) défini en enlevant une i-ème partie des données image déterminées ;
      - une troisième étape (630) de détermination d'un i-ème rayon de protection (Di) pour le i-ème sous-ensemble (Si) à partir des i-èmes sous-valeurs d'incertitude et de la au moins une valeur nominale d'incertitude ;

   les seconde et troisième étapes étant réitérées pour chaque i-ème sous-ensemble (Si), i variant entre 1 et une valeur M définie ;
      - une quatrième étape (640) de détermination d'un rayon de protection (D) à partir des M i-èmes rayons de protection (Di) déterminés.

2. Méthode (600) selon la revendication 1, le rayon de protection (D) étant le plus grand parmi les M i-èmes rayons de protection (Di) déterminés.

3. Méthode (600) selon la revendication 1 ou 2, la troisième étape (630) de détermination comprenant :

   - une première sous-étape (631) de détermination des i-èmes différences entre les i-èmes sous-valeurs d'incertitude et la au moins une valeur nominale d'incertitude ; et
   - une seconde sous-étape (632) de détermination d'un i-ème écart-type des différences comme étant la plus grande valeur d'écart-type des i-èmes différences ;

   le i-ème rayon de protection (Di) étant déterminé à partir du i-ème écart-type des différences.

4. Méthode (600) selon la revendication 3, la troisième étape (630) de détermination comprenant en outre :

   - une troisième sous-étape (633) de détermination d'un i-ème écart-type des différences corrigé, comme étant le i-ème écart-type des différences multiplié par une première constante de pondération (a) ;

   le i-ème rayon de protection (Di) étant déterminé à partir du i-ème écart-type des différences corrigé.

5. Méthode (600) selon la revendication 4, la valeur de la première constante de pondération (a) étant obtenue à partir de la probabilité de fausse alarme du système de navigation par vision, par exemple en utilisant une fonction inverse de probabilité de densité de la distribution.

6. Méthode (600) selon l'une des revendications 3 à 5, la troisième étape (630) de détermination comprenant en outre :

   - une quatrième sous-étape (634) de détermination d'un i-ème écart-type du i-ème sous-ensemble (Si) comme étant la plus grande valeur d'écart-type des i-èmes sous-valeurs d'incertitude ;

le i-ème rayon de protection (Di) étant déterminé à partir d'une somme entre le i-ème écart-type des différences ou le i-ème écart-type des différences corrigé et le i-ème écart-type.

**7.** Méthode (600) selon la revendication 6, la troisième étape (630) de détermination comprenant en outre :

- une cinquième sous-étape (635) de détermination d'un i-ème écart-type corrigé, comme étant le i-ème écart-type multiplié par une seconde constante de pondération (b) ;

le i-ème rayon de protection (Di) étant déterminé à partir d'une somme entre le i-ème écart-type des différences ou le i-ème écart-type des différences corrigé et le i-ème écart-type corrigé.

**8.** Méthode (600) selon la revendication 7, la valeur de la seconde constante de pondération (b) étant obtenue à partir de la probabilité de non-détection du système de navigation par vision, par exemple en utilisant une fonction inverse de probabilité de densité de la distribution.

**9.** Méthode (600) selon l'une des revendications précédentes, les valeurs d'incertitude d'au moins une valeur de mouvement obtenue par la méthode de traitement étant définies par une matrice de covariance de ladite valeur de mouvement.

**10.** Méthode (600) selon l'une des revendications précédentes, les valeurs d'incertitude d'au moins une valeur de mouvement obtenue par la méthode de traitement étant déterminées en propageant le bruit au niveau d'au moins une parmi les première et deuxième images sur les grandeurs intermédiaires nécessaires au calcul par ladite méthode de traitement de ladite valeur de mouvement.

**11.** Méthode (600) selon la revendication 9 en combinaison avec la revendication 10, comprenant une étape préalable (500) de détermination d'une matrice de covariance de la au moins une valeur de mouvement obtenue par la méthode de traitement, ladite étape préalable comprenant les étapes suivantes :

- une première sous-étape (510) de caractérisation d'un bruit ($\sigma$) au niveau d'au moins une parmi la première et la deuxième image (I1, I2) de manière à obtenir une matrice de covariance ($\Sigma_\sigma$) dudit bruit ; et
- au moins une sous-étape complémentaire (520, 530, 540, 550, 560, 570) de propagation de la matrice de covariance ($\Sigma_\sigma$) du bruit ($\sigma$) obtenue sur ladite valeur de mouvement, ladite au moins une sous-étape complémentaire étant apte à propager la matrice de covariance ($\Sigma_\sigma$) du bruit ($\sigma$) sur les grandeurs intermédiaires nécessaires au calcul de la au moins une valeur de mouvement par la méthode de traitement.

**12.** Méthode (600) selon la revendication 11, la méthode de traitement (50, 51, 52) comprenant les étapes suivantes :

- une première étape (100) d'acquisition d'au moins une première et une seconde images (I1, I2) comprenant en outre l'acquisition d'au moins une troisième image (I3) ;
- une deuxième étape (200) de détermination d'au moins une valeur de mouvement intermédiaire entre au moins une première et une deuxième image (I1, I2), comprenant une sous-étape (201) de sélection de points d'intérêt (P1, P2) communs auxdites première et seconde images ;
- une troisième étape (300) de détermination de points (X) dans l'espace correspondant à des points d'intérêt (P1, P2) communs aux première et seconde images (I1, I2) ;
- une quatrième étape (400) de détermination d'au moins une valeur de mouvement finale à partir des points (X) dans l'espace déterminés et de points d'intérêt (P3) dans la au moins une troisième image (I3) ; et

la au moins une sous-étape complémentaire (520, 530, 540, 550, 560, 570) de propagation de la matrice de covariance ($\Sigma_\sigma$) du bruit ($\sigma$) sur la valeur de mouvement comprenant :

- une sous-étape (520, 530) de propagation de la matrice de covariance ($\Sigma_\sigma$) du bruit ($\sigma$) à la au moins une valeur de mouvement intermédiaire ;
- une sous-étape (540) de propagation de la matrice de covariance de la au moins une valeur de mouvement intermédiaire aux points (X) dans l'espace ;
- une sous-étape (550, 560, 570) de propagation de la matrice de covariance des points (X) dans l'espace à la au moins une valeur de mouvement finale.

**13.** Méthode (600) selon l'une des revendications 1 à 12, au moins une valeur de mouvement étant une valeur de rotation et/ou une valeur de translation.

**14.** Méthode de traitement (52) apte à déterminer au moins une valeur de mouvement entre un premier instant (t1) et un deuxième instant (t2) à partir d'une première image (I1) prise au premier instant (t1), d'une deuxième image (I2) prise au deuxième instant (t2) et d'une pluralité de données image déterminées sur les au moins première et deuxième images, comprenant en outre la méthode (600) de détermination d'un rayon de protection (D) selon l'une des revendications 1 à 13.

**15.** Système de vision comprenant :

- au moins un capteur d'images (11) adapté apte à réaliser au moins une première image (I1) à un premier instant (t1) et une deuxième image (I2) à un deuxième instant (t2) ; et
- une unité de traitement (21) couplée au capteur d'images (11) et adapté à implémenter la méthode de traitement (52) selon la revendication 14.

**Patentansprüche**

**1.** Verfahren (600) zum Bestimmen eines Schutzradius (D) eines sichtgestützten Navigationssystems, wobei das System umfasst:

- mindestens einen Bildsensor (11), der dazu geeignet ist, mindestens ein erstes Bild (I1) zu einem ersten Zeitpunkt (t1) und ein zweites Bild (I2) zu einem zweiten Zeitpunkt (t2) zu erzeugen; und
- eine Verarbeitungseinheit (21), die an jeden Bildsensor (11) gekoppelt und dazu geeignet ist, ein Verarbeitungsverfahren (50, 51, 52) zu implementieren, das dazu geeignet ist, mindestens einen Bewegungswert zwischen dem ersten Zeitpunkt (t1) und dem zweiten Zeitpunkt (t2) anhand des ersten Bildes (I1) und des zweiten Bildes (I2) und einer Vielzahl von Bilddaten, die in dem mindestens ersten und zweiten Bild bestimmt werden, zu bestimmen, wobei die Bilddaten Koordinaten einer Vielzahl von Punkten von Interesse in mindestens dem ersten Bild (I1) und dem zweiten Bild (I2) umfassen,

wobei das Verfahren zum Bestimmen eines Schutzradius die folgenden Schritte umfasst:

- einen ersten Schritt (610) zum Bestimmen mindestens eines Nennwertes der Unsicherheit des mindestens einen Bewegungswertes, der durch das Verarbeitungsverfahren für einen Satz (S) erhalten wird, der die Vielzahl von bestimmten Bilddaten umfasst;

**dadurch gekennzeichnet, dass** das Verfahren die folgenden Schritte umfasst:

- einen zweiten Schritt (620) zum Bestimmen von i-ten Unterwerten der Unsicherheit des mindestens einen Bewegungswertes, der durch das Verarbeitungsverfahren für eine i-te Teilmenge (Si) bestimmt wird, die definiert wird, indem ein i-ter Teil der bestimmten Bilddaten entfernt wird;
- einen dritten Schritt (630) zum Bestimmen eines i-ten Schutzradius (Di) für die i-te Teilmenge (Si) anhand der i-ten Unterwerte der Unsicherheit und des mindestens einen Nennwertes der Unsicherheit;

wobei der zweite und der dritte Schritt für jede i-te Teilmenge (Si) wiederholt wird, wobei i zwischen 1 und einem definierten Wert M variiert;

- einen vierten Schritt (640) zum Bestimmen eines Schutzradius (D) anhand der bestimmten M i-ten Schutzradien (Di).

**2.** Verfahren (600) nach Anspruch 1, wobei der Schutzradius (D) der größte von den bestimmten M i-ten Schutzradien (Di) ist.

**3.** Verfahren (600) nach Anspruch 1 oder 2, wobei der dritte Bestimmungsschritt (630) umfasst:

- einen ersten Unterschritt (631) zum Bestimmen der i-ten Unterschiede zwischen den i-ten Unterwerten der Unsicherheit und dem mindestens einen Nennwert der Unsicherheit; und
- einen zweiten Unterschritt (632) zum Bestimmen einer i-ten Standardabweichung der Unterschiede als den größten Wert der Standardabweichung der i-ten Unterschiede;

wobei der i-te Schutzradius (Di) anhand der i-ten Standardabweichung der Unterschiede bestimmt wird.

4. Verfahren (600) nach Anspruch 3, wobei der dritte Bestimmungsschritt (630) ferner umfasst:

- einen dritten Unterschritt (633) zum Bestimmen einer korrigierten i-ten Standardabweichung der Unterschiede als die i-te Standardabweichung der Unterschiede multipliziert mit einer ersten Gewichtungskonstante (a);

wobei der i-te Schutzradius (Di) anhand der korrigierten i-ten Standardabweichung der Unterschiede bestimmt wird.

5. Verfahren (600) nach Anspruch 4, wobei der Wert der ersten Gewichtungskonstante (a) anhand der Wahrscheinlichkeit eines Fehlalarms des sichtgestützten Navigationssystems erhalten wird, zum Beispiel durch Verwenden einer inversen Wahrscheinlichkeitsdichtefunktion der Verteilung.

6. Verfahren (600) nach einem der Ansprüche 3 bis 5, wobei der dritte Bestimmungsschritt (630) ferner umfasst:

- einen vierten Unterschritt (634) zum Bestimmen einer i-ten Standardabweichung der i-ten Teilmenge (Si) als den größten Wert der Standardabweichung der i-ten Unterwerte der Unsicherheit;

wobei der i-te Schutzradius (Di) anhand einer Summe zwischen der i-ten Standardabweichung der Unterschiede oder der korrigierten i-ten Standardabweichung der Unterschiede und der i-ten Standardabweichung bestimmt wird.

7. Verfahren (600) nach Anspruch 6, wobei der dritte Bestimmungsschritt (630) ferner umfasst:

- einen fünften Unterschritt (635) zum Bestimmen einer korrigierten i-ten Standardabweichung als die i-te Standardabweichung multipliziert mit einer zweiten Gewichtungskonstante (b);

wobei der i-te Schutzradius (Di) anhand einer Summe zwischen der i-ten Standardabweichung der Unterschiede oder der korrigierten i-ten Standardabweichung der Unterschiede und der korrigierten i-ten Standardabweichung bestimmt wird.

8. Verfahren (600) nach Anspruch 7, wobei der Wert der zweiten Gewichtungskonstante (b) anhand der Wahrscheinlichkeit eines Nichterkennens des sichtgestützten Navigationssystems erhalten wird, zum Beispiel durch Verwenden einer inversen Wahrscheinlichkeitsdichtefunktion der Verteilung.

9. Verfahren (600) nach einem der vorhergehenden Ansprüche, wobei die Unsicherheitswerte mindestens eines Bewegungswertes, der durch das Verarbeitungsverfahren erhalten wird, durch eine Kovarianzmatrix des Bewegungswertes definiert wird.

10. Verfahren (600) nach einem der vorhergehenden Ansprüche, wobei die Unsicherheitswerte mindestens eines Bewegungswertes, der durch das Verarbeitungsverfahren erhalten wird, bestimmt werden, indem das Rauschen in mindestens einem von dem ersten und dem zweiten Bild auf die Zwischengrößen verteilt wird, die für die Berechnung durch das Verarbeitungsverfahren des Bewegungswertes benötigt werden.

11. Verfahren (600) nach Anspruch 9 in Kombination mit Anspruch 10, umfassend einen vorherigen Schritt (500) zum Bestimmen einer Kovarianzmatrix des mindestens einen Bewegungswertes, der durch das Verarbeitungsverfahren erhalten wird, wobei der vorherige Schritt die folgenden Schritte umfasst:

- einen ersten Unterschritt (510) zum Charakterisieren eines Rauschens ($\sigma$) in mindestens einem von dem ersten Bild und dem zweiten Bild (I1, I2), um eine Kovarianzmatrix ($\Sigma_\sigma$) des Rauschens zu erhalten; und
- mindestens einen ergänzenden Unterschritt (520, 530, 540, 550, 560, 570) zum Verbreiten der Kovarianzmatrix ($\Sigma_\sigma$) des Rauschens ($\sigma$), die auf dem Bewegungswert erhalten wird, wobei der mindestens eine ergänzende Unterschritt dazu geeignet ist, die Kovarianzmatrix ($\Sigma_\sigma$) des Rauschens ($\sigma$) auf die Zwischengrößen zu verteilen, die für die Berechnung des mindestens einen Bewegungswertes durch das Verarbeitungsverfahren benötigt werden.

12. Verfahren (600) nach Anspruch 11, wobei das Verarbeitungsverfahren (50, 51, 52) die folgenden Schritte umfasst:

- einen ersten Schritt (100) zum Erfassen mindestens eines ersten und eines zweiten Bildes (I1, I2), ferner umfassend das Erfassen mindestens eines dritten Bildes (I3);
- einen zweiten Schritt (200) zum Bestimmen mindestens eines Zwischenbewegungswertes zwischen mindestens einem ersten und einem zweiten Bild (I1, I2), umfassend einen Unterschritt (201) zum Auswählen von Punkten von Interesse (P1, P2), die dem ersten und dem zweiten Bild gemeinsam sind;
- einen dritten Schritt (300) zum Bestimmen von Punkten (X) im Raum entsprechend Punkten von Interesse (P1, P2), die dem ersten und dem zweiten Bild (I1, I2) gemeinsam sind;
- einen vierten Schritt (400) zum Bestimmen mindestens eines endgültigen Bewegungswertes anhand der bestimmten Punkte (X) im Raum und Punkten von Interesse (P3) in dem mindestens einen dritten Bild (I3); und

den mindestens einen ergänzenden Unterschritt (520, 530, 540, 550, 560, 570) zum Verbreiten der Kovarianzmatrix ($\Sigma_\sigma$) des Rauschens ($\sigma$) auf den Bewegungswert, umfassend:

- einen Unterschritt (520, 530) zum Verbreiten der Kovarianzmatrix ($\Sigma_\sigma$) des Rauschens ($\sigma$) auf den mindestens einen Zwischenbewegungswert;
- einen Unterschritt (540) zum Verbreiten der Kovarianzmatrix des mindestens einen Zwischenbewegungswertes auf die Punkte (X) im Raum;
- einen Unterschritt (550, 560, 570) zum Verbreiten der Kovarianzmatrix der Punkte (X) im Raum auf den mindestens einen endgültigen Bewegungswert.

13. Verfahren (600) nach einem der Ansprüche 1 bis 12, wobei mindestens ein Bewegungswert ein Rotationswert und/oder ein Verschiebewert ist.

14. Verarbeitungsverfahren (52), das dazu geeignet ist, mindestens einen Bewegungswert zwischen einem ersten Zeitpunkt (t1) und einem zweiten Zeitpunkt (t2) anhand eines ersten Bildes (I1), das zum ersten Zeitpunkt (t1) aufgenommen wird, eines zweiten Bildes (I2), das zum zweiten Zeitpunkt (t2) aufgenommen wird, und einer Vielzahl von Bilddaten, die in dem mindestens ersten und zweiten Bild bestimmt werden, zu bestimmen, ferner umfassend das Verfahren (600) zum Bestimmen eines Schutzradius (D) nach einem der Ansprüche 1 bis 13.

15. Sichtsystem, umfassend:

- mindestens einen Bildsensor (11), der dazu geeignet ist, mindestens ein erstes Bild (I1) zu einem ersten Zeitpunkt (t1) und ein zweites Bild (I2) zu einem zweiten Zeitpunkt (t2) zu erzeugen; und
- eine Verarbeitungseinheit (21), die mit dem Bildsensor (11) gekoppelt und dazu geeignet ist, das Verarbeitungsverfahren (52) nach Anspruch 14 zu implementieren.

## Claims

1. A method (600) for determining a protection radius (D) of a vision-based navigation system, said system comprising:

- at least one image sensor (11) able to produce at least a first image (I1) at a first time (t1) and a second image (I2) at a second time (t2); and
- a processing unit (21) coupled to each image sensor (11) and able to implement a processing method (50, 51, 52) able to determine at least one motion value between the first time (t1) and the second time (t2) on the basis of the first image (I1) and of the second image (I2) and of a plurality of image data determined on the at least first and second images, the image data comprising coordinates of a plurality of points of interest on at least the first image (I1) and the second image (I2),

said method for determining a protection radius comprising the following steps:

- a first step (610) of determining at least one nominal uncertainty value of the at least one motion value obtained by the processing method for a set (S) comprising the plurality of determined image data;

**characterised in that** the method comprises the following steps:

- a second step (620) of determining i-th uncertainty sub-values of the at least one motion value determined by the processing method for an i-th subset (Si) defined by removing an i-th part of the determined image data;
- a third step (630) of determining an i-th protection radius (Di) for the i-th subset (Si) from the i-th uncertainty sub-values and the at least one nominal uncertainty value;

the second and third steps being repeated for each i-th subset (Si), i varying between 1 and a defined value M;

- a fourth step (640) of determining a protection radius (D) from the M determined i-th protection radii (Di).

2. The method (600) according to claim 1, the protection radius (D) being the largest among the M determined i-th protection radii (Di).

3. The method (600) according to claim 1 or 2, the third step (630) of determination comprising:

- a first sub-step (631) of determining the i-th differences between the i-th uncertainty sub-values and the at least one nominal uncertainty value; and
- a second sub-step (632) of determining an i-th standard deviation of the differences as being the largest value of standard deviation of the i-th differences;

the i-th protection radius (Di) being determined on the basis of the i-th standard deviation of the differences.

4. The method (600) according to claim 3, the third step (630) of determination further comprising:

- a third sub-step (633) of determining a corrected i-th standard deviation of the differences as being the i-th standard deviation of the differences multiplied by a first weighting constant (a);

the i-th protection radius (Di) being determined from the corrected i-th standard deviation of the differences.

5. The method (600) according to claim 4, the value of the first weighting constant (a) being obtained from the probability of false alarm of the vision-based navigation system, for example by using an inverse probability density function of the distribution.

6. The method (600) according to one of claims 3 to 5, the third step (630) of determination further comprising:

- a fourth sub-step (634) of determining an i-th standard deviation of the i-th subset (Si) as being the largest value of standard deviation of the i-th uncertainty sub-values;

the i-th protection radius (Di) being determined from a sum between the i-th standard deviation of the differences or the corrected i-th standard deviation of the differences and the i-th standard deviation.

7. The method (600) according to claim 6, the third step (630) of determination further comprising:

- a fifth sub-step (635) of determining an i-th corrected standard deviation as being the i-th standard deviation multiplied by a second weighting constant (b);

the i-th protection radius (Di) being determined from a sum between the i-th standard deviation of the differences or the corrected i-th standard deviation of the differences and the i-th corrected standard deviation.

8. The method (600) according to claim 7, the value of the second weighting constant (b) being obtained from the probability of non-detection of the vision-based navigation system, for example by using an inverse probability density function of the distribution.

9. The method (600) according to one of the preceding claims, the uncertainty values of at least one motion value obtained by the processing method being defined by a covariance matrix of said motion value.

10. The method (600) according to one of the preceding claims, the uncertainty values of at least one motion value obtained by the processing method being determined by propagating the noise at at least one among the first and second images on the intermediate quantities required for the computation of said motion value by said processing method.

11. The method (600) according to claim 9 in combination with claim 10, comprising a prior step (500) of determining a covariance matrix of the at least one motion value obtained by the processing method, said prior step comprising the following steps:

- a first sub-step (510) of characterising a noise ($\sigma$) at at least one among the first and the second image (I1, I2) so as to obtain a covariance matrix ($\Sigma_\sigma$) of said noise; and
- at least one complementary sub-step (520, 530, 540, 550, 560, 570) of propagating the covariance matrix ($\Sigma_\sigma$) of the noise ($\sigma$) obtained on said motion value, said at least one complementary sub-step being able to propagate the covariance matrix ($\Sigma_\sigma$) of the noise ($\sigma$) on the intermediate quantities required for the computation of the at least one motion value by the processing method.

12. The method (600) according to claim 11, the processing method (50, 51, 52) comprising the following steps:

- a first step (100) of acquiring at least one first and one second images (I1, I2) further comprising acquiring at least one third image (I3);
- a second step (200) of determining at least one intermediate motion value between at least one first and one second image (I1, I2), comprising a sub-step (201) of selecting points of interest (P1, P2) common to said first and second images;
- a third step (300) of determining points (X) in space corresponding to points of interest (P1, P2) common to the first and second images (I1, I2);
- a fourth step (400) of determining at least one final motion value from the determined points (X) in space and from points of interest (P3) in the at least one third image (I3); and

the at least one complementary sub-step (520, 530, 540, 550, 560, 570) of propagating the covariance matrix ($\Sigma_\sigma$) of the noise ($\sigma$) on the motion value comprising:

- a sub-step (520, 530) of propagating the covariance matrix ($\Sigma_\sigma$) of the noise ($\sigma$) to the at least one intermediate motion value;
- a sub-step (540) of propagating the covariance matrix of the at least one intermediate motion value to the points (X) in space;
- a sub-step (550, 560, 570) of propagating the covariance matrix of the points (X) in space to the at least one final motion value.

13. The method (600) according to one of claims 1 to 12, at least one motion value being a rotation value and/or a translation value.

14. A processing method (52) able to determine at least one motion value between a first time (t1) and a second time (t2) on the basis of a first image (I1) taken at the first time (t1), of a second image (I2) taken at the second time (t2) and of a plurality of image data determined on the at least first and second images, further comprising the method (600) for determining a protection radius (D) according to one of claims 1 to 13.

15. A vision system comprising:

- at least one image sensor (11) able to produce at least a first image (I1) at a first time (t1) and a second image (I2) at a second time (t2); and
- a processing unit (21) coupled to the image sensor (11) and able to implement the processing method (52) according to claim 14.

[Fig 1]

```
┌──────────────┐  I1 (t1), I2 (t2)  ┌──────────────┐     R,t      ┌──────────────┐
│      10      │ ─────────────────→ │      20      │ ───────────→ │      40      │
└──────────────┘                    └──────────────┘              └──────────────┘
```

[Fig 2]

```
┌──────────┐ I1 (t1), I2 (t2) ┌──────────┐  R, t, Σ  ┌──────────┐   D   ┌──────────┐
│    11    │ ───────────────→ │    21    │ ────────→ │    31    │ ────→ │    41    │
└──────────┘                  └──────────┘           └──────────┘       └──────────┘
```

[Fig 3]

[Fig 4]

[Fig 5]

[Fig 8]

## RÉFÉRENCES CITÉES DANS LA DESCRIPTION

**Documents brevets cités dans la description**

- US 2016005164 A1
- WO 2018026544 A1